# EUROPEAN PATENT APPLICATION

(11) **EP 4 629 574 A1**
(43) Date of publication of application: **08.10.2025**
(21) Application number: 22966913.0
(22) Date of filing: 01.12.2022
(51) Int. Cl.: H04L 27/00

(54) **OPERATION METHODS AND APPARATUSES BASED ON MULTI-ACCESS POINTS, DEVICES, STORAGE MEDIUM AND PRODUCT**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); ZHOU, Pei, Dongguan, Guangdong 523860 (CN); LUO, Chaoming, Dongguan, Guangdong 523860 (CN)
(74) Representative: Novagraaf Technologies
(86) International application number: PCT/CN2022/136027
(87) International publication number: WO 2024/113324

(57) **Abstract**

Operation methods and apparatuses based on multi-access points (AP), devices, a storage medium and a product, belonging to the technical field of wireless communications. A method comprises: sending a first frame so as to establish for a first station (STA) device a protected predetermined service period based on a multi-AP operation, the protected predetermined service period based on the multi-AP operation is a protected predetermined service period which is established by a first AP device negotiating with at least one second AP device. The method optimizes the transmission interference between stations so as to reduce the transmission time delay of stations, and further improves the transmission efficiency of stations.

## Description

### TECHNICAL FIELD

Embodiments of the present disclosure relate to the field of wireless communications, and in particular, relate to an operation method and apparatus based on multiple access points (APs), and a device, a storage medium, and a product thereof.

### RELATED ART

In a wireless local area network (WLAN), a target wake time (TWT) supports power saving works in a large-scale Internet of things (IoT) environment.

Institute of Electrical and Electronic Engineers (IEEE) 802.11be proposes operations of restricted TWT to allow APs to provide more predictable and lower worst-case delay and jitter and higher reliability for low-latency service transmission using an enhanced medium access protection and resource reservation mechanism.

### SUMMARY

Embodiments of the present disclosure provide an operation method and apparatus based on multiple APs, and a device, a storage medium, and a product thereof. The technical solutions are as follows.

According to an aspect of the embodiments of the present disclosure, an operation method based on multiple APs is provided. The method is applicable to a first AP device, and includes:
transmitting a first frame to establish a protected predetermined service period based on a multi-AP operation for a first station (STA) device, wherein the protected predetermined service period based on the multi-AP operation is a protected predetermined service period negotiated and established by the first AP device and at least one second AP device.

According to an aspect of the embodiments of the present disclosure, an operation method based on multiple APs is provided. The method is applicable to a first STA device, and includes:
receiving a first frame, wherein the first frame indicates that a first AP device has established a protected predetermined service period based on a multi-AP operation for the first STA device, wherein the protected predetermined service period based on the multi-AP operation is a protected predetermined service period negotiated and established by the first AP device and at least one second AP device.

According to an aspect of the embodiments of the present disclosure, an operation method based on multiple APs is provided. The method is applicable to a second AP device, and includes:
establishing a protected predetermined service period based on a multi-AP operation for a first STA device by collaborating with a first AP device, wherein the protected predetermined service period based on the multi-AP operation is a protected predetermined service period negotiated and established by the first AP device and at least one second AP device.

According to an aspect of the embodiments of the present disclosure, an operation apparatus based on multiple APs is provided. The apparatus includes:
a transmitting module, configured to transmit a first frame to establish a protected predetermined service period based on a multi-AP operation for a first STA device, wherein the protected predetermined service period based on the multi-AP operation is a protected predetermined service period negotiated and established by a first AP device and at least one second AP device.

According to an aspect of the embodiments of the present disclosure, an operation apparatus based on multiple APs is provided. The apparatus includes:
a receiving module, configured to receive a first frame, wherein the first frame indicates that a first AP device has established a protected predetermined service period based on a multi-AP operation for a first STA device, wherein the protected predetermined service period based on the multi-AP operation is a protected predetermined service period negotiated and established by the first AP device and at least one second AP device.

According to an aspect of the embodiments of the present disclosure, an operation apparatus based on multiple APs is provided. The apparatus includes:
an establishing module, configured to establish a protected predetermined service period based on a multi-AP operation for a first STA device by collaborating with a first AP device, wherein the protected predetermined service period based on the multi-AP operation is a protected predetermined service period negotiated and established by the first AP device and at least one second AP device.

According to an aspect of the embodiments of the present disclosure, an AP device is provided. The AP device is practiced as a first AP device, and includes a processor, a memory, and a transceiver; wherein the transceiver is configured to transmit a first frame to establish a protected predetermined service period based on a multi-AP operation for a first STA device, wherein the protected predetermined service period based on the multi-AP operation is a protected predetermined service period negotiated and established by the first AP device and at least one second AP device.

According to an aspect of the embodiments of the present disclosure, an STA device is provided. The STA device is practiced as a first STA device, and includes a processor, a memory, and a transceiver; wherein the transceiver is configured to receive a first frame, wherein the first frame indicates that a first AP device has established a protected predetermined service period based on a multi-AP operation for the first STA device, wherein the protected predetermined service period based on the multi-AP operation is a protected predetermined service period negotiated and established by the first AP device and at least one second AP device.

According to an aspect of the embodiments of the present disclosure, an AP device is provided. The AP device is practiced as a second AP device, and includes a processor, a memory, and a transceiver, wherein the transceiver is configured to establish a protected predetermined service period based on a multi-AP operation for a first STA device by collaborating with a first AP device, wherein the protected predetermined service period based on the multi-AP operation is a protected predetermined service period negotiated and established by the first AP device and at least one second AP device.

According to an aspect of the embodiments of the present disclosure, a computer device is provided. The computer device includes a processor, a memory, and a transceiver; wherein the memory stores one or more computer programs, wherein the one or more computer programs, when loaded and run by a processor, cause the computer device to perform the operation method based on multiple APs described above.

According to an aspect of the embodiments of the present disclosure, a computer-readable storage medium is provided. The computer-readable storage medium stores one or more computer programs; wherein the one or more computer programs, when loaded and run by a processor, cause the a computer device to perform the operation method based on multiple APs described above.

According to an aspect of the embodiments of the present disclosure, a computer program product is provided. The computer program product includes one or more computer instructions, wherein the one or more computer instructions are stored in a computer-readable storage medium, and when read and executed by a processor of a computer device, cause the computer device to perform the operation method based on multiple APs described above.

According to an aspect of the embodiments of the present disclosure, a chip is provided. The chip includes a processor configured to call and run one or more computer programs to cause a computer device equipped with the chip to perform the operation method based on multiple APs described above.

According to an aspect of the embodiments of the present disclosure, a computer program is provided. The computer program, when loaded and run by a processor of a computer device, causes the computer device to perform the operation method based on multiple APs described above.

The technical solutions according to the embodiments of the present disclosure achieve the following technical effects.

The first AP device establishes the protected predetermined service period based on the multi-AP operation for the first STA device, such that the predetermined service period protecting the frame exchange of the first STA device is extended to a plurality of APs. As such, a protection range of the frame exchange is enlarged, a transmission interference between STAs is mitigated to reduce a transmission delay of STAs, and a transmission efficiency of the STA is improved.

### BRIEF DESCRIPTION OF DRAWINGS

FIG. 1 is a schematic diagram of a network architecture of a communication system according to some embodiments of the present disclosure;
FIG. 2 is a schematic diagram of a multi-AP coordination-based operation according to some embodiments of the present disclosure;
FIG. 3 is a flowchart of an operation method based on multiple APs according to some embodiments of the present disclosure;
FIG. 4 is a flowchart of an operation method based on multiple APs according to some embodiments of the present disclosure;
FIG. 5 is a flowchart of an operation method based on multiple APs according to some embodiments of the present disclosure;
FIG. 6 is a flowchart of an operation method based on multiple APs according to some embodiments of the present disclosure;
FIG. 7 is a schematic diagram of related definitions of a Multi-AP Operation Information subfield involved in the embodiments shown in FIG. 6;
FIG. 8 is a schematic diagram of a format of a Coordinated AP Set Information subfield involved in the embodiments shown in FIG. 6;
FIG. 9 is a schematic diagram of a format of a Cooperated AP Set Information subfield involved in the embodiments shown in FIG. 6;
FIG. 10 is a schematic flowchart of establishment and operation of an R-TWT service period (SP) based on a multi-AP operation involved in the embodiments shown in FIG. 6;
FIG. 11 is a schematic diagram of an operation scenario of a multi-AP coordination-based R-TWT according to some embodiments of the present disclosure;
FIG. 12 is a main flowchart of establishing a multi-AP coordination-based R-TWT and schematic operations according to some embodiments of the present disclosure;
FIG. 13 is an operation scenario of a multi-AP coordination-based R-TWT according to some embodiments of the present disclosure;
FIG. 14 is a schematic diagram of establishment and operations of a multi-AP coordination-based R-TWT according to some embodiments of the present disclosure;
FIG. 15 is a schematic diagram of an operation scenario of a multi-AP cooperation-based R-TWT according to some embodiments of the present disclosure;
FIG. 16 is a main flowchart of establishing and operating a multi-AP cooperation-based R-TWT and schematic operations according to some embodiments of the present disclosure;
FIG. 17 is a schematic diagram of an operation scenario of a multi-AP cooperation-based R-TWT according to some embodiments of the present disclosure;
FIG. 18 is a main flowchart of establishing and operating a multi-AP cooperation-based R-TWT and schematic operations according to some embodiments of the present disclosure;
FIG. 19 is a schematic diagram of a mixed-mode scenario of multi-AP coordination-based and multi-AP cooperation-based according to some embodiments of the present disclosure;
FIG. 20 is a block diagram of an operation apparatus based on multiple APs according to some embodiments of the present disclosure;
FIG. 21 is a block diagram of an operation apparatus based on multiple APs according to some embodiments of the present disclosure;
FIG. 22 is a block diagram of an operation apparatus based on multiple APs according to some embodiments of the present disclosure; and
FIG. 23 is a schematic structural diagram of a computer device according to some embodiments of the present disclosure.

### DETAILED DESCRIPTION

The network architecture and service scenarios in the embodiments of the present disclosure are intended to describe the technical solutions according to the embodiments of the present disclosure more clearly, but do not constitute a limitation on the technical solutions according to the embodiments of the present disclosure. Those of ordinary skill in the art acknowledge that, with the evolution of the network architecture and the emergence of new service scenarios, the technical solutions according to the embodiments of the present disclosure are also applicable to similar technical problems.

The technical solutions according to the embodiments of the present disclosure are also applicable to various communication systems, for example, WLAN, wireless fidelity (Wi-Fi), other communication systems, and the like.

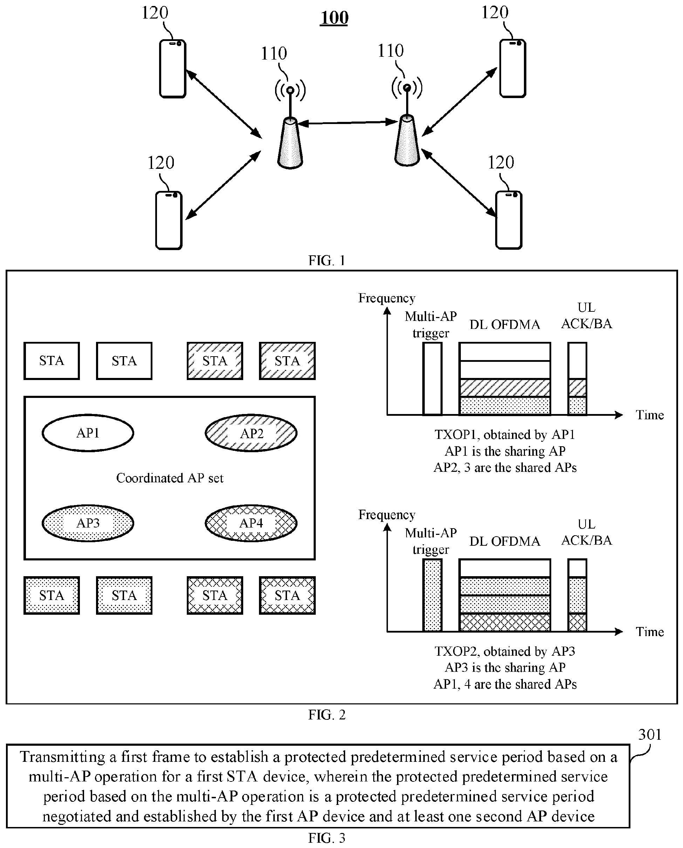

Illustratively, referring to FIG. 1, FIG. 1 is a schematic diagram of a network architecture of a communication system 100 according to some embodiments of the present disclosure. The communication system 100 includes an AP 110 and an STA 120 access to a network over the AP 110.

In some scenarios, the AP is also referred to as an AP STA. That is, in a certain sense, the AP is also a type of STA.

In some scenarios, the STA is also referred to as a non-AP STA.

The communications within the communication system 100 involve communications between an AP and a non-AP STA, communications between non-AP STAs, or communications between an STA and a peer STA. The peer STA refers to a device in peer communication with an STA. For example, the peer STA may be an AP or a non-AP STA.

The AP is a bridge to connect a wired network to a wireless network, and mainly functions to connect various wireless network clients and access the wireless network to the Ethernet. The AP device is a terminal device (for example, a mobile phone) equipped with a Wi-Fi chip or a network device (for example, a wireless router, a wireless switch, or a wireless relay device).

It should be noted that the function of the STA in the communication system is not definite or specific. For example, in some scenarios, the mobile phone serves as the non-AP STA in a case where the mobile phone is connected to the router, and the mobile phone serves as the AP in a case where the mobile phone acts as a hotspot of other mobile phones.

The AP and the non-AP STA are devices applicable to the Internet of vehicles, IoT nodes or sensors in the IoT, and smart cameras, smart remote controls, smart water meters and the like in the smart home, sensors in the smart city, and the like.

In some embodiments, the non-AP STA supports, but is not limited to, an 802.11be format. In some embodiments, the non-AP STA also supports various current and future WLAN formats of the 802.11 family, such as an 802.1 1ax format, an 802.11ac format, an 802.11n format, an 802.11g format, an 802.11b format, an 802.11a format, and the like.

In some embodiments, the AP is a device supporting the 802.11be format. The AP is also a device supporting various current and future WLAN formats of the 802.11 family, such as an 802.11ax format, an 802.11ac format, an 802.11n format, an 802.11g format, an 802.11b format, an 802.11a format, and the like.

In some embodiments of the present disclosure, the STA is a mobile phone, a pad, an e-reader, a laptop, a desktop, a television, a virtual reality (VR) device, an augmented reality (AR) device, a set-top box, a wireless device in self-driving, an in-vehicle communication device, a wireless device in remote medical surgery, a wireless device in smart grid, a wireless device in transportation safety, a wireless device in a smart city or smart home, a wireless communication chip/application-specific integrated circuit (ASIC)/system on chip (SoC), and the like that support the WLAN/Wi-Fi technologies.

The Wi-Fi technology supports frequency bands including, but not limited to, low frequency bands (2.4 GHz, 5 GHz, and 6 GHz), and high frequency bands (60 GHz).

An AP STA and two non-AP STAs are illustrated in FIG. 1. In some embodiments, the communication system 100 may include a plurality of AP STAs and other quantities of non-AP STAs, which is not limited in the embodiments of the present disclosure.

It should be understood that devices in the network/system with communication functions in the embodiments of the present disclosure may be also referred to as communication devices. Using the communication system 100 shown in FIG. 1 as an example, the communication device includes an AP 110 and an STA 120 with the communication function, and the AP 110 and the STA 120 may be specific devices mentioned above, which are not repeated herein. The communication device may also include other devices in the communication system 100, for example, a network controller, a gateway, and other network entities, which is not limited in the embodiments of the present disclosure.

The network architecture shown in FIG. 1 includes two APs 110 and four STAs 120. The embodiments of the present disclosure do not limit the number of APs 110 and STAs 120. For example, the network architecture may include more APs 110 and STAs 120.

It should be noted that the terms "system" and "network" herein are exchangeable. The term "and/or" herein only describes associations between associated objects, and indicates three types of relationships. For example, the phrase "A and/or B" means (A), (B), or (A and B). The symbol "/" generally indicates an "or" relationship between the associated objects.

It should be understood that the term "indication" in the embodiments of the present disclosure refers to direct or indirect indication, or an associated relationship. Illustratively, in a case where A indicates B, it means that: A directly indicates B, for example, B can be acquired through A; A indirectly indicates B, for example, A indicates C, and B can be acquired through C; or A and B have an association relationship.

In some embodiments of the present disclosure, the term "correspondence" means direct correspondence or indirect correspondence between the two objects, association between the two objects, or a relationship of indicating and being indicated, configuring and being configured, or the like.

In the embodiments of the present disclosure, the term "predefined" may be implemented by pre-storing corresponding codes, forms or other means indicating relevant information in a device (including, for example, an AP and an STA), and the present disclosure does not limit the specific implementation. For example, predefinition may be defined in the protocol.

In the embodiments of the present disclosure, the term "protocol" may be the standard protocol in the communication field, which may include, for example, the Wi-Fi protocol and relevant protocols appliable to future Wi-Fi communication systems, which is not limited in the embodiments of the present disclosure.

The AP 110 and the STA 120 may be associated and communicate with each other using the WLAN technology. The association refers to a process of wireless link service negotiation between the STA and the AP to establish a wireless link between the STA and the AP.

### 1) TWT

The TWT is used to support power saving in the large-scale IoT environment. In the 802.11ax, the TWT additionally supports trigger-based uplink transmission on the basis of 802.11ah, such that a range of TWT works is extended.

In the TWT, a schedule (the schedule is negotiated between the terminal and the AP) is established between the terminal and the AP, and is composed of TWT periods. In the case of reaching the period negotiated between the terminal and the AP, the terminal wakes up, waits for a trigger frame transmitted by the AP, and performs data exchange. In a case where the transmission is complete, the terminal returns to a sleep state. Each terminal may negotiate with the AP independently, and each terminal has a separate TWT period.

The TWT allows the AP to manage behaviors of a basic service set (BSS) to alleviate contention between STAs and reduce an awake time of an STA using a power management mode, which is achieved by STAs operating in nonoverlapping time domain and/or frequency domain and performing frame exchange within a predetermined service period. Therefore, for an application effect of the TWT, the AP generally requires all associated STAs in the BSS to participate in the TWT for scheduling. Based on the 802.11ax TWT protocol, a high efficiency (HE, specifically referring to 802.11ax) AP requests all affiliated STAs supporting the TWT to participate in the TWT. A non-AP STA should negotiate an individual TWT protocol or participate in a broadcast TWT upon receiving an instruction from the AP to participate in the TWT. Moreover, the SP of the TWT includes a trigger enabled SP and a non-trigger enabled SP, and the TWT schedules the AP by transmitting a trigger frame in the trigger enabled SP. Meanwhile, based on the 802.11ax, a TWT reservation STA cannot transmit a frame to the TWT for scheduling the AP beyond the broadcast TWT SP, and in the triggered enabled broadcast TWT, the TWT reservation sites cannot transmit a frame not carried in an HE trigger-based (TB) physical layer protocol data unit (PPDU) to the TWT for scheduling the AP.

IEEE 802.11be proposes the operations of restricted TWT to allow APs to provide more predictable and lower worst-case delay and jitter and higher reliability for the low-latency service transmission using the enhanced medium access protection and resource reservation mechanism. Currently, the restricted TWT mainly adds two channel access rules in terms of channel access. That is, an extremely high throughput (EHT) non-AP STA, as an owner of a transmission opportunity (TXOP), should ensure termination of the TXOP at the start of any restricted TWT service period in a case where the TXOP is acquired beyond the restricted TWT service period; and the EHT AP schedules a quiet interval overlapped with the restricted TWT service period to shield operations of a legacy STA supporting a quiet element within the TWT SP, but a shielding operation within the quiet interval is invalid for the non-AP EHT STA.

### 2) Multi-AP coordination technology

A multi-AP coordination-based operation mode includes a coordinated orthogonal frequency division multiple access (C-OFDMA), coordinated multi-user multiple-in multiple-out (MIMO), coordinated spatial reuse (C-SR), joint transmission (J-TX), coordinated beamforming (C-BF), and the like. The AP supporting the multi-AP coordination-based operation indicates a capability of a multi-AP coordinated transmission scheme by transmitting a beacon frame or other management frames.

A static multi-AP set is also referred to as a candidate set, in which any two or more APs may perform multi-AP transmission (for example, C-OFDMA, C-BF, C-SR, J-TX, and the like). A dynamic multi-AP set (also referred to as an operation set) includes the sharing AP acquiring the TXOP and used for the multi-AP transmission, and the shared AP(s) and STA(s) participating in the multi-AP transmission, as shown in the schematic diagram of the multi-AP coordination-based operation in FIG. 2. The sharing AP and the shared AP are defined based on the TXOP, and roles may change in different TXOPs. The sharing AP is for acquiring the TXOP and initiating the multi-AP transmission, and the shared AP participates in cooperation with the sharing AP.

Currently, the R-TWT defined in the IEEE 802.11be is limited to negotiation and establishment of the R-TWT between an AP and an associated non-AP STA in a BSS. In a case where a plurality of APs are coordinated to establish the R-TWT in a multi-AP scenario, the coordinate mode of the plurality of APs and how to coordinate the R-TWT establishment need to be considered. In particular, the coordination between the plurality of APs includes: coordination operations of the plurality of APs in the time domain, the spatial domain, and the frequency domain; R-TWT information being shared between the plurality of APs, and the R-TWT being established and managed based on the shared information, or channel access and transmission during the R-TWT SP established near the APs are adjusted. The problems to be solved in multi-AP collaboration establishment of the R-TWT are described below.

For the multi-AP coordinated transmission, a coordinated transmission initiator AP (the sharing AP) transmits the frame triggering coordinated transmission to the shared AP upon gaining the TXOP by channel contention for coordinated transmission. Therefore, for scheduled or predetermined multi-AP coordinated transmission, the key to scheduling for the multi-AP coordinated transmission is that one of the plurality of APs gains the TXOP at the scheduled time, and other APs respond to the frame initiated by the AP for triggering the coordinated transmission and perform the coordinated transmission. In a case where the established R-TWT involves in the coordination-based operations of the plurality of APs in the time domain, the spatial domain, and the frequency domain, that is, scheduling or predetermining the multi-AP coordinated transmission, each AP may include an STA that does not support the multi-AP coordination-based operations (for example, a legacy STA) or an STA supporting multi-AP coordination-based operations, only one AP is insufficient for the behavior of R-TWT scheduling AP, and each AP participating in the scheduled multi-AP coordinated transmission should perform the behavior of R-TWT scheduling AP.

Referring to FIG. 3, FIG. 3 is a flowchart of an operation method based on multiple APs according to some embodiments of the present disclosure. The method is applicable to a first AP device. The first AP device is any AP 110 in the network architecture shown in FIG. 1. The method includes the following process.

In S301, a first frame is transmitted to establish a protected predetermined service period based on a multi-AP operation for a first STA device, wherein the protected predetermined service period based on the multi-AP operation is a protected predetermined service period negotiated and established by the first AP device and at least one second AP device.

In summary, in the technical solutions according to the embodiments of the present disclosure, the first AP device establishes the protected predetermined service period based on the multi-AP operation for the first STA device, such that the predetermined service period protecting the frame exchange of the first STA device is extended to a plurality of APs. As such, a protection range of the frame exchange is enlarged, a transmission interference between STAs is mitigated to reduce a transmission delay of STAs, and a transmission efficiency of the STA is improved.

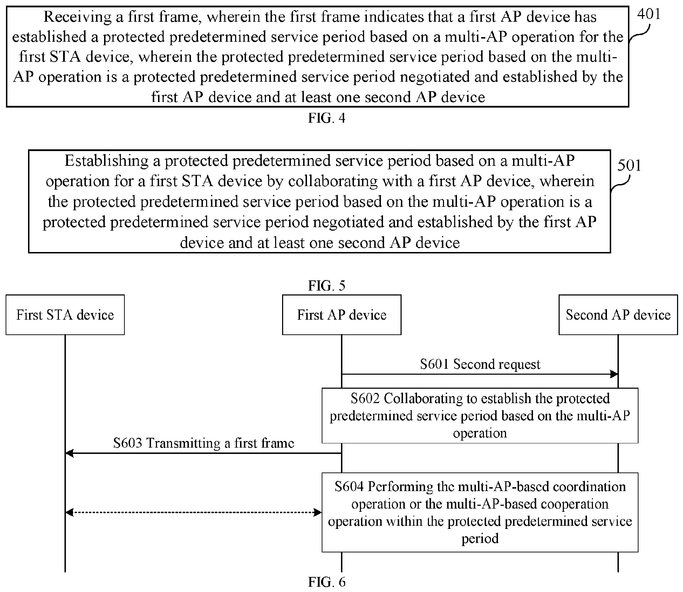

Referring to FIG. 4, FIG. 4 is a flowchart of an operation method based on multiple APs according to some embodiments of the present disclosure. The method is applicable to a first STA device. The first STA device is any STA 120 in the network architecture shown in FIG. 1. The method includes the following process.

In S401, a first frame is received, wherein the first frame indicates that a first AP device has established a protected predetermined service period based on a multi-AP operation for the first STA device, wherein the protected predetermined service period based on the multi-AP operation is a protected predetermined service period negotiated and established by the first AP device and at least one second AP device.

In summary, in the technical solutions according to the embodiments of the present disclosure, the first AP device establishes the protected predetermined service period based on the multi-AP operation for the first STA device, such that the predetermined service period that is designed to protect the frame exchange of the first STA device is extended to a plurality of APs. As such, a protection range of the frame exchange is enlarged, a transmission interference between STAs is mitigated to reduce a transmission delay of STAs, and a transmission efficiency of the STA is improved.

Referring to FIG. 5, FIG. 5 is a flowchart of an operation method based on multiple APs according to some embodiments of the present disclosure. The method is applicable to a second AP device. The second AP device is any AP 110 in the network architecture shown in FIG. 1. The method includes the following process.

In S501, a protected predetermined service period based on a multi-AP operation is established for a first STA device by collaborating with a first AP device, wherein the protected predetermined service period based on the multi-AP operation is a protected predetermined service period negotiated and established by the first AP device and at least one second AP device.

In summary, in the technical solutions according to the embodiments of the present disclosure, the first AP device establishes the protected predetermined service period based on the multi-AP operation for the first STA device by collaborating with a first AP device, such that the predetermined service period protecting the frame exchange of the first STA device is extended to a plurality of APs. As such, a protection range of the frame exchange is enlarged, a transmission interference between STAs is mitigated to reduce a transmission delay of STAs, and a transmission efficiency of the STA is improved.

Based on the technical solutions shown in FIG. 3 to FIG. 5, referring to FIG. 6, FIG. 6 is a flowchart of an operation method based on multiple APs according to some embodiments of the present disclosure. The method is applicable to interaction of a first AP device, at least one second AP device, and a first STA device. The first STA device is any STA 120 in the network architecture shown in FIG. 1, and the first AP device and the at least one second AP device are at least two APs 110 in the network architecture shown in FIG. 1. The method includes the following processes.

In S601, a first AP device transmits a second request to at least one second AP device, and the at least one second AP device receives the second request, wherein the second request is used to request the at least one second AP device and the first AP device to collaborate to establish the protected predetermined service period based on the multi-AP operation for a first STA device.

In some embodiments, the protected predetermined service period is an R-TWT period.

The first request is transmitted by a wireless mode or a wired mode.

In the embodiments of the present disclosure, the protected predetermined service period is used for the first AP device and the second AP device to perform a multi-AP coordination-based operation. The multi-AP coordination-based operation includes preferentially ensuring or only allowing the first AP device and the at least one second AP device to coordinate to perform frame exchange with member STAs, inclusive of the first STA device, within the protected predetermined service period using a specific coordinated transmission mode.

Alternatively, the protected predetermined service period is used for the first AP device and the second AP device to perform a multi-AP cooperation-based operation within the protected predetermined service period. The multi-AP cooperation-based operation includes preferentially ensuring or only allowing the first AP device to perform frame exchange with member STAs, inclusive of the first STA device, within the protected predetermined service period, and managing or restricting, by the at least one second AP device, transmission of STAs in a basic service set (BSS) of the at least one second AP device to protect communications between the first AP device and the member STAs, inclusive of the first STA device, within the protected predetermined service period.

Alternatively, the protected predetermined service period is used for the first AP device and a part of n second AP devices to perform a multi-AP coordination-based operation, and for the first AP device and another part of the n second AP devices to perform a multi-AP cooperation-based operation in a case where a number of the at least one second AP device is n, and n is greater than or equal to 2.

That is, the at least one second AP device may be an AP device that performs the multi-AP coordination with the first AP device (referred to as a multi-AP coordination mode); or, the at least one second AP device may be an AP device that performs the multi-AP cooperation with the first AP device (referred to as a multi-AP cooperation mode); or, in a case where a number n of the at least one second AP device is greater than 1, the n second AP devices include AP devices performing the multi-AP coordination with the first AP device and AP devices performing the multi-AP cooperation with the first AP device (referred to as a mixed mode).

The multi-AP coordination means that a plurality of APs coordinates to serve for the STA device, and the multi-AP cooperation means that one or more AP devices provide channel protection for transmission of STAs in a BSS of another or more AP devices. For example, one or more AP devices restrict transmission behaviors of STA devices in the BSS of the one or more AP devices within the protected predetermined service period to avoid interference on transmission of STAs in a BSS of another or more AP devices within the protected predetermined time period.

The process of managing or restricting, by the second AP device, transmission of the STAs in the BSS of the second AP device to protect communications between the first AP device and the member STAs, inclusive of the first STA device, within the protected predetermined service period includes, but is not limited to:

controlling all or part of the STAs in the BSS of the second AP device to terminate the TXOP before a start time of the protected predetermined time period; or, controlling all or part of the STAs in the BSS of the second AP device to terminate the TXOP on a specified channel before a start time of the protected predetermined time period; or, controlling all or part of the STAs in the BSS of the second AP device to be in a silent state within a duration corresponding to the protected predetermined time period; or, controlling all or part of the STAs in the BSS of the second AP device to be in a silent state on a specified channel within a duration corresponding to the protected predetermined time period; or, controlling all or part of the STAs in the BSS of the second AP device to terminate the TXOP before a start time of the protected predetermined time period, and controlling all or part of the STAs in the BSS of the second AP device to be in a silent state within a duration corresponding to the protected predetermined time period; or, controlling all or part of the STAs in the BSS of the second AP device to terminate the TXOP on a specified channel before a start time of the protected predetermined time period, and controlling all or part of the STAs in the BSS of the second AP device to be in a silent state on a specified channel within a duration corresponding to the protected predetermined time period; or, controlling all or part of the STAs in the BSS of the second AP device to terminate the TXOP before a start time of the protected predetermined time period, and restricting a parameter set for contending for the TXOP and used within a duration corresponding to the protected predetermined time period by all or part of the STAs in the BSS of the second AP device.

The channel protection modes are illustrative, and the mode of managing or restricting, by the second AP device, transmission of the STAs in the BSS of the second AP device is not limited in the embodiments of the present disclosure.

In some embodiments, the specific coordinated transmission mode includes at least one of the coordinated OFDMA, the coordinated MIMO, the coordinated spatial reuse, the joint transmission, or the coordinated beamforming.

In some embodiments, in performing the multi-AP cooperation-based operation, a duration of a first service period in a BSS corresponding to the first AP device is not overlapped with a duration of a third service period within the protected predetermined service period. In this case, the multi-AP cooperation mode is exclusive.

Alternatively, a duration of a first service period in a BSS corresponding to the first AP device is partially overlapped with a duration of a third service period within the protected predetermined service period. In this case, the multi-AP cooperation mode is non-exclusive.

The third service period is a predetermined service period in the BSS of the at least one second AP device that performs the multi-AP cooperation-based operation with the first AP device, and the BSS of the at least one second AP device is an overlapping basic service set (OBSS) of the BSS corresponding to the first AP device in the case of multi-AP cooperation.

In some embodiments, transmitting the second request to the at least one second AP device includes:

transmitting a first sub-request to the at least one second AP device in a case where the at least one second AP device is an AP device that performs the multi-AP coordination-based operation with the first AP device. The first sub-request is used to request the at least one second AP device to establish a second service period in the BSS corresponding to the at least one second AP device within the protected predetermined service period. Accordingly, the first sub-request from the first AP device is received in a case where the at least one second AP device is the AP device that performs the multi-AP coordination-based operation with the first AP device.

In some embodiments, the first sub-request includes second attribute information of the protected predetermined service period. The second attribute information of the protected predetermined service period includes at least one of priority information of the first STA device, a coordinated AP set performing the multi-AP coordination-based operation, or the specific coordinated transmission mode corresponding to the multi-AP coordination-based operation.

In some embodiments, transmitting the second request to the at least one second AP device includes: transmitting a second sub-request to the at least one second AP device in a case where the at least one second AP device is an AP device that performs the multi-AP cooperation-based operation with the first AP device. Accordingly, the second sub-request from the first AP device is received in a case where the at least one second AP device is an AP device that performs the multi-AP cooperation-based operation with the first AP device.

The second sub-request includes third attribute information of the protected predetermined service period. The third attribute information of the protected predetermined service period includes at least one of priority information of the first STA device or a cooperation mode corresponding to the multi-AP cooperation-based operation.

In some embodiments, the third attribute information further includes a start time and an end time of the predetermined service period, and the like.

For the second AP device that performs different multi-AP operations, the first AP device transmits different requests to the second AP device to indicate different multi-AP operation modes.

In S602, the first AP device and the second AP collaborate to establish the protected predetermined service period based on the multi-AP operation.

The first AP device transmits a first broadcast message for establishing a first service period in the process of establishing the first service period corresponding to a BSS of the first device within the protected predetermined service period. The first broadcast message includes first attribute information of the protected predetermined service period.

A second AP device in the at least one second AP device that performs the multi-AP cooperation-based operation with the first AP device transmits a second broadcast message for establishing a second service period in the process of establishing the first service period corresponding to the BSS of the first device within the protected predetermined service period. In some embodiments, the second broadcast message includes second attribute information of the protected predetermined service period.

In some embodiments, in performing the multi-AP coordination-based operation, a start time and an end time of a first service period are the same as a start time and an end time of a second service period within the protected predetermined service period.

In some embodiments, the first AP device further annunciates a quiet interval. The quiet interval is used to shield a transmission operation of a second STA device that does not support the protected predetermined service period in a BSS corresponding to the first AP device within the protected predetermined service period.

A second STA device that does not support the protected predetermined service period is a legacy STA.

In some embodiments, the second AP device further annunciates a quiet interval. The quiet interval is used to shield a transmission operation of a second STA device that does not support the protected predetermined service period in a BSS corresponding to the second AP device within the protected predetermined service period.

In some embodiments, the second STA device is an STA device that does not support the protected predetermined service period other than a specified type of STA device. The specified type of STA device includes at least one of an EHT device or an UHR device.

In some embodiments, the quiet interval is invalid for the specified type of STA device, and preferentially ensures transmission of the specified type of STA device.

In some embodiments, in performing the multi-AP cooperation-based operation within the protected predetermined service period, the second AP device transmits a third broadcast message. The third broadcast message is used to manage or restrict transmission of STAs in the BSS of the second AP device within the protected predetermined service period.

The third broadcast message is also referred to as cooperation protection information corresponding to the OBSS TWT. For example, the cooperation protection information includes a start time and an end time of the protected predetermined service period, priority information, and other third attribute information.

In some embodiments, prior to S601, the first STA device transmits the first request to the first AP device, the first AP device receives the first request. The first request is used to request to establish the protected predetermined service period.

The establishment of the protected predetermined service period is initiated by the first STA device. In this case, the first frame is a response frame to the first request.

In some embodiments, the first request includes first attribute information of the protected predetermined service period.

In some embodiments, the protected predetermined service period is actively initiated by the first AP device.

In S603, the first AP device transmits a first frame to establish the protected predetermined service period based on the multi-AP operation for the first STA device, and the first STA device receives the first frame.

In some embodiments, the first frame includes first attribute information of the protected predetermined service period.

In some embodiments, the first attribute information of the protected predetermined service period includes at least one of a coordinated AP set performing the multi-AP coordination-based operation, the specific coordinated transmission mode, a cooperated AP set performing a local multi-AP cooperation-based operation, or a cooperation mode corresponding to the multi-AP cooperation-based operation.

The coordinated AP set carries identifiers of various AP devices performing the multi-AP coordination-based operation (including an identifier of the first AP device), and the cooperated AP set carries identifiers of various AP devices performing the multi-AP cooperation-based operation with the first AP device.

In some embodiments, the first attribute information of the protected predetermined service period is in a Multi-AP Operation Information subfield in a Broadcast TWT Parameter Set field.

In some embodiments, a Broadcast TWT Information subfield in the Broadcast TWT Parameter Set field includes a Multi-AP Operation Information Present subfield.

A parameter value of the Multi-AP Operation Information Present subfield indicates whether the Broadcast TWT Parameter Set field includes the Multi-AP Operation Information subfield, and

the Broadcast TWT Parameter Set field includes the Multi-AP Operation Information subfield in a case where the parameter value of the Multi-AP Operation Information Present subfield is a first specified value.

In some embodiments, the Multi-AP Operation Information subfield includes at least one of a Multi-AP Operation Control subfield, a Coordinated AP Set Information subfield, or a Cooperated AP Set Information subfield; wherein
the Multi-AP Operation Control subfield includes at least one of a Multi-AP Operation Mode subfield, a Priority subfield, a Coordinated AP Set Information Present subfield, a Cooperated AP Set Information Present subfield, a Multi-AP Coordinated Transmission Mode subfield, a Multi-AP Cooperation Mode subfield, or a Reserved subfield; wherein
   the Multi-AP Operation Mode subfield indicates a multi-AP operation mode, wherein the multi-AP operation mode includes the multi-AP coordination-based operation and/or the multi-AP cooperation-based operation;
   the Priority subfield indicates priority information of the first STA device;
   the Coordinated AP Set Information Present subfield indicates whether the Coordinated AP Set Information subfield is present;
   the Cooperated AP Set Information Present subfield indicates whether the Cooperated AP Set Information subfield is present;
   the Multi-AP Coordinated Transmission Mode subfield indicates the specific coordinated transmission mode corresponding to the multi-AP coordination-based operation; and
   the Multi-AP Cooperation Mode subfield indicates the cooperation mode corresponding to the multi-AP cooperation-based operation;
the Coordinated AP Set Information subfield indicates AP devices in the coordinated AP set; and
the Cooperated AP Set Information subfield indicates AP devices in the cooperated AP set.

Using an example where the protected predetermined service period is an R-TWT, the embodiments of the present disclosure describe definition of a Broadcast TWT (R-TWT) Parameter Set field based on the multi-AP operation.

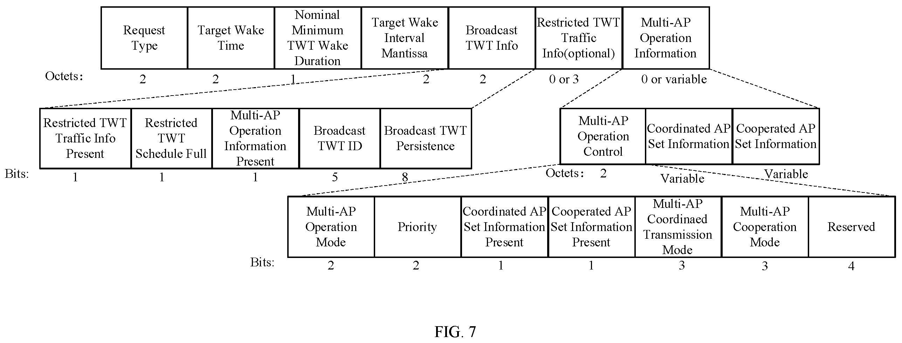

Specifically, the Multi-AP Operation Information subfield is added in the Broadcast TWT Parameter Set field, and a Multi-AP Operation Information Present subfield is added in the Broadcast TWT Information (Info) subfield. Relevant definitions of the Multi-AP Operation Information subfield in the Broadcast TWT (R-TWT) Parameter Set field are shown in FIG. 7. Various subfields in FIG. 7 are shown as follows.
(1) The Multi-AP Operation Information Present subfield, indicating whether the Multi-AP Operation Information subfield is present. The Multi-AP Operation Information subfield is present in a case where the Multi-AP Operation Information Present subfield takes a value of 1, and the Multi-AP Operation Information subfield is not present in a case where the Multi-AP Operation Information Present subfield takes a value of 0.
(2) The Multi-AP Operation Information subfield includes the Multi-AP Operation Control subfield, the Coordinated AP Set Information subfield, and the Cooperated AP Set Information subfield. The Multi-AP Operation Control subfield includes the Multi-AP Operation Mode subfield, the Priority subfield, the Coordinated AP Set Information Present subfield, the Cooperated AP Set Information Present subfield, the Multi-AP Coordinated Transmission Mode subfield, and the Multi-AP Cooperation Mode subfield.
   1) The Multi-AP Operation Mode subfield indicates a multi-AP operation mode corresponding to the TWT.

In a case where the Multi-AP Operation Mode subfield takes a value of 0, the multi-AP operation mode is a coordination mode jointly established and shared by the plurality of APs forming the coordinated AP set. In the SP corresponding to the established R-TWT, the coordinating AP coordinates with the member STAs corresponding to the R-TWT SP to perform frame exchange using the specific coordination operation mode.

In a case where the Multi-AP Operation Mode subfield takes a value of 1, the multi-AP operation mode is a cooperation operation mode for cooperating and establishing the TWT by one or more APs forming the cooperated AP set. In the SP corresponding to the established R-TWT, relevant STAs in the BSS of the cooperated AP protect channel access and frame exchange of the member STAs corresponding to the TWT through a specific behavior or measure.

In a case where the Multi-AP Operation Mode subfield takes a value of 2, the multi-AP operation mode is a coordination mode jointly established and shared by the plurality of APs forming the coordinated AP set and cooperated by one or more APs forming another cooperated AP set.

2) The Priority subfield indicates a priority type corresponding to the TWT. A value 0 of the Priority subfield represents a regular need, the value 1 of the Priority subfield represents a strong need, and the value 2 of the Priority subfield represents a mandate.

3) The Coordinated AP Set Information Present subfield indicates whether the Coordinated AP Set Information subfield is present. The Coordinated AP Set Information subfield is present in a case where the Coordinated AP Set Information Present subfield takes a value of 1, and the Coordinated AP Set Information subfield is not present in a case where the Coordinated AP Set Information Present subfield takes a value of 0.

4) The Cooperated AP Set Information Present subfield indicates whether the Cooperated AP Set Information subfield is present. The Cooperated AP Set Information subfield is present in a case where the Cooperated AP Set Information Present subfield takes a value of 1, and the Cooperated AP Set Information subfield is not present in a case where the Cooperated AP Set Information Present subfield takes a value of 0.

5) The Multi-AP Coordinated Transmission Mode subfield indicates a multi-AP coordinated transmission mode corresponding to the R-TWT in the coordinated AP set within the R-TWT service period. For example, a value 1 of the Multi-AP Coordinated Transmission Mode subfield represents the coordinated OFDMA, the value 2 of the Multi-AP Coordinated Transmission Mode subfield represents the coordinated MIMO, the value 3 of the Multi-AP Coordinated Transmission Mode subfield represents the coordinated spatial reuse, the value 4 of the Multi-AP Coordinated Transmission Mode subfield represents the joint transmission, the value 1 of the Multi-AP Coordinated Transmission Mode subfield represents the C-BF, and other values of the Multi-AP Coordinated Transmission Mode subfield are reserved.

6) The Multi-AP Cooperation Mode subfield indicates the cooperation mode corresponding to the TWT in the cooperated AP set. For example, a value 1 of the Multi-AP Cooperation Mode subfield represents that the cooperation mode is an exclusive R-TWT, that is, an SP of an R-TWT established by the AP in the cooperated AP set needs to be completely staggered with the SP corresponding to the R-TWT, a value 2 of the Multi-AP Cooperation Mode subfield represents that the cooperation mode is a non-exclusive R-TWT, that is, an SP of an R-TWT established by the AP in the cooperated AP set is allowed to be overlapped with the SP corresponding to the R-TWT, and other values of the Multi-AP Cooperation Mode subfield are reserved.

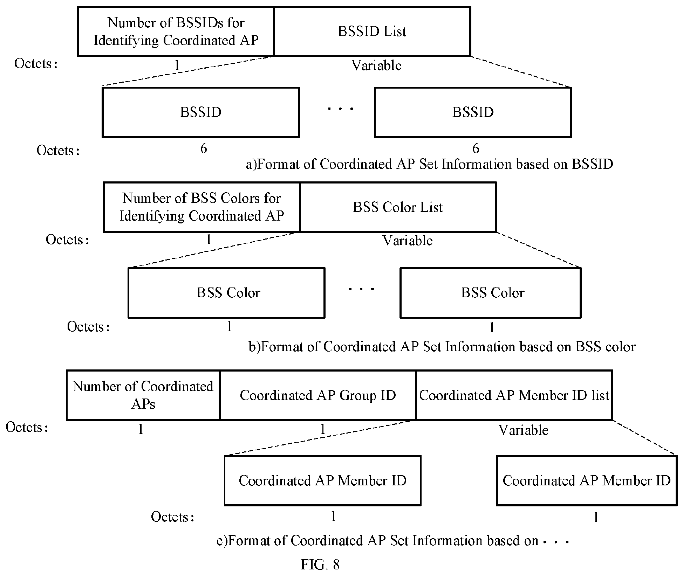

(3) The Coordinated AP Set Information subfield indicates information of coordinated APs in the coordinated AP set corresponding to the R-TWT. The coordinated AP is identified by any of a BSS ID, a BSS color, and a coordinated AP set identifier. The schematic diagram of the format of the Coordinated AP Set Information subfield is shown in FIG. 8.

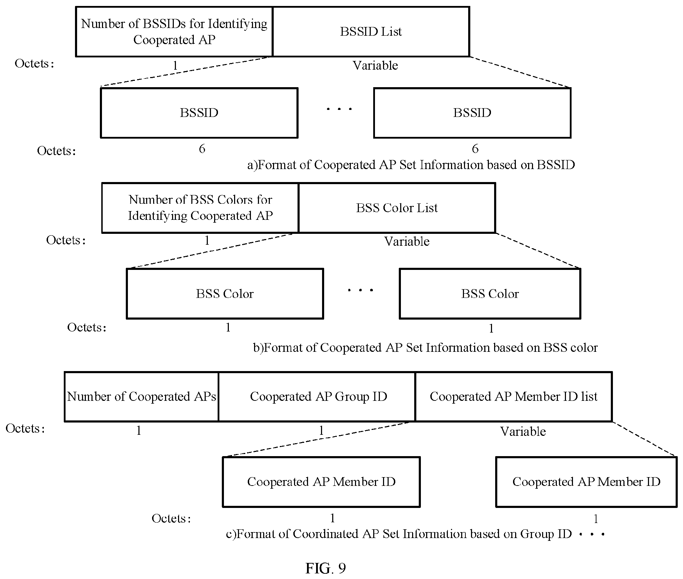

(4) The Cooperated AP Set Information subfield indicates information of cooperated APs in the cooperated AP set corresponding to the R-TWT. The cooperated AP is identified by any of a BSS ID, a BSS color, and a coordinated AP set identifier. The schematic diagram of the format of the Cooperated AP Set Information subfield is shown in FIG. 9.

In S604, the first AP device and the second AP device perform the multi-AP coordination-based operation or the multi-AP cooperation-based operation within the protected predetermined service period.

Specifically, the first AP device performs the multi-AP coordination-based operation within the protected predetermined service period; or
the first AP device performs the multi-AP cooperation-based operation within the protected predetermined service period; or
in a case where the number of the at least one second AP device is n, the first AP device performs the multi-AP coordination-based operation with a part of n second AP devices and performs the multi-AP cooperation-based operation with another part of the n second AP devices within the protected predetermined service period, wherein n is greater than or equal to 2.

For example, the operation of the first AP device for performing the multi-AP coordination-based operation within the protected predetermined service period includes transmitting a second frame (also referred to as a multi-AP trigger frame/multi-AP coordination trigger frame) to the second AP device in a case where the first AP device gains the TXOP. The second frame is used to trigger the first AP device and the second AP device to perform the multi-AP coordination-based operation within the protected predetermined service period.

Alternatively, the operation of the first AP device for performing the multi-AP cooperation-based operation within the protected predetermined service period includes receiving a second frame from the second AP device, and performing the multi-AP cooperation-based operation within the protected predetermined service period by the first AP device and the second AP device.

The second AP device performs the multi-AP coordination-based operation within the protected predetermined service period; or
the second AP device performs the multi-AP cooperation-based operation within the protected predetermined service period with the first AP device.

For example, the operation of the second AP device for performing the multi-AP coordination-based operation within the protected predetermined service period includes transmitting a second frame to the first AP device in a case where the second AP device gains the TXOP. The second frame is used to trigger the first AP device and the second AP device to perform the multi-AP coordination-based operation within the protected predetermined service period.

Alternatively, the operation of the second AP device for performing the multi-AP cooperation-based operation within the protected predetermined service period includes receiving a second frame from the second AP device, and performing the multi-AP cooperation-based operation within the protected predetermined service period by the first AP device and the second AP device.

Using an example where the first AP device and one of the at least one of the second AP device are the AP1 and the AP2 respectively, and the protected predetermined service period is the R-TWT, establishment of the R-TWT based on the multi-AP operation and the operation method mainly include the following three modes.
(1) Mode 1: multi-AP coordination. The AP1 and the AP2 performing the multi-AP coordination-based operation jointly establish the protected predetermined service period, for example, the R-TWT SP. That is, the AP1 and the AP2 coordinate to perform frame exchange with the member STA within the protected predetermined service period (for example, the R-TWT SP) using the specific coordination operation mode. The AP1 and the AP2 perform coordination operation in the time domain, the spatial domain, and the frequency domain, and the coordination operation includes the coordinated OFDMA, the coordinated MIMO, the coordinated spatial reuse, the joint transmission, the coordinated beamforming, and the like. For example, the AP1 and the AP2 transmit the member STA STA1-1 (associated with the AP1 and/or the AP2) corresponding to the R-TWT SP within the R-TWT SP through the joint transmission or the coordinated beamforming, or the AP1 and the AP2 transmit the member STA STA1-1 (associated with the AP1 and/or the AP2) and the STA2-1 (associated with the AP2 and/or the AP1) corresponding to the R-TWT SP within the R-TWT SP through the coordinated OFDMA, the coordinated MIMO, or the coordinated spatial reuse.

For multi-AP coordinated transmission, a coordinated transmission initiator AP (the sharing AP) transmits the frame triggering coordinated transmission to the shared AP upon gaining the TXOP by channel contention for coordinated transmission. Therefore, for scheduled or predetermined multi-AP coordinated transmission, the key to scheduling for the multi-AP coordinated transmission is that one of the plurality of APs gains the TXOP at the scheduled time, and other APs respond to the frame initiated by the AP for triggering the coordinated transmission and perform the coordinated transmission. Thus, for the mode 1, the R-TWT is jointly established by the plurality of APs participating in the coordinated transmission, and thus each AP participating in the multi-AP coordinated transmission needs to perform the behavior of R-TWT scheduling AP, which includes one or more of the following behaviors.
1) The AP carries a broadcast TWT element in the broadcast beacon frame to indicate the broadcast TWT SP. In particular, in a case where any R-TWT membership is established, the AP declares R-TWT scheduling information by carrying a broadcast TWT element containing the R-TWT Parameter Set field in the transmitted management frame.
2) The AP schedules a quiet interval overlapped with the R-TWT SP to shield the operation of the legacy STA supporting the quiet element within the TWT SP. However, the shielding operations within the quiet interval is invalid for a specific non-AP STA (for example, an EHT STA, a UHR STA).

In particular, after any AP of the coordination multiple APs that jointly establish the R-TWT in the mode 1 or any AP of the APs that supports in determining as the coordinated transport initiator acquires the TXOP within the R-TWT SP, it is necessary to ensure that other coordinated APs preferentially serve for member STAs of the R-TWT based on the predetermined multi-AP coordinated transmission mode.

(2) Mode 2: multi-AP cooperation. The AP1 and the AP2 respectively establish the protected predetermined service period, for example, the R-TWT SP. The AP1 and the associated STA establish the R-TWT, and the AP1 shares information of the established R-TWT SP to the AP2, and the AP2 protects channel access of the AP1 and the corresponding member STA within the R-TWT SP established by the AP1 by controlling behaviors thereof and behaviors of the associated STA.

In a case where R-TWTs established by the plurality of APs are overlapped within the corresponding R-TWT SP in time, channel access and transmission of the BSS overlapping regions therein are collided within the overlapped time. In addition, in the mode 2, an AP supporting multi-AP coordinated transmission initiates the multi-AP coordinated transmission to the member STA with another AP also supporting the multi-AP coordinated transmission within the R-TWT SP established by the AP itself. However, because the another AP also supporting the multi-AP coordinated transmission does not perform the behavior of scheduling the AP corresponding to the R-TWT, the coordinated transmission is not scheduled in advance.

The mode 2 includes the following types.
1) The R-TWT SPs established by the two APs are completely staggered in time (exclusive); and the R-TWT established by the AP1 (or the AP2) requires that the R-TWT SP thereof is completely staggered with the R-TWT SP of the R-TWT established or to be established by the coordinated AP2 (or AP1) in time.
2) The R-TWT SPs established by the two APs are overlapped in time (non-exclusive); the R-TWT established by the AP1 (or the AP2) allows that the R-TWT SP thereof is partially overlapped with the R-TWT SP of the R-TWT established or to be established by the coordinated AP2 (or AP1) in time; and in a case where the R-TWT SPs established by the two APs are partially overlapped in time, the priorities of the two R-TWTs are used to determine the channel access within which R-TWT SP is preferentially protected.
(3) Mixed mode: multi-AP coordination and multi-AP cooperation. The plurality of APs forming the coordinated AP set jointly establish and share, and cooperate with one or more APs forming the cooperated AP set to establish and operate the R-TWT.

R-TWT SP establishment modes and features based on the multi-AP operation are shown in Table 1.

**Table 1**

| Serial number | Multi-AP operation mode | R-TWT type | Priority | Feature |
|---|---|---|---|---|
| 1 | The plurality of APs forming the coordinated AP set jointly establish and share (coordination operation) | R-TWT based on the coordination-based operation mode, for example, R-TWT based on C-SR, and the like | 1) mandate | The plurality of APs forming the coordinated AP set jointly establish the R-TWT, and the coordinated AP coordinates with the member STA corresponding to the R-TWT SP to perform frame exchange within the R-TWT SP using the specific coordination operation mode. |
| | | | 2) strong need | |
| | | | 3) regular need | |
| 2 | An AP cooperated with another AP establishes and occupy (the cooperated APs form the cooperated AP set) | 1) exclusive R-TWT (that is, the SP of the R-TWT established by another AP and the SP thereof are required to be completely staggered in time); | 1) mandate | An AP establishes an R-TWT in the associated STA in the BSS and cooperates with another AP in the R-TWT establishment process within the R-TWT SP; and the relevant STA in the BSS of the coordinated AP protects the channel access and frame exchange of the member STA corresponding to the TWT SP within the R-TWT SP using the specific action or measure |
| | | | 2) strong need | |
| | | 2) non-exclusive R-TWT (that is, the SP of the R-TWT established by another AP and the SP thereof are allowed to be overlapped in time) | 3) regular need | |
| 3 | Mixed mode (the plurality of APs forming the coordinated AP set jointly establish and share, and cooperate with one or more APs forming the cooperated AP set) | 1) exclusive R-TWT (that is, the SP of the R-TWT established by the AP in the cooperated AP set and the SP thereof are required to be completely staggered in time); | 1) mandate | The plurality of APs forming the coordinated AP set jointly establish the R-TWT and cooperate with the AP in the cooperated AP set in the R-TWT establishment process; the coordinated AP coordinates with the member STA corresponding to the R-TWT SP to perform frame exchange within the R-TWT SP using the specific coordination operation mode, and the relevant STA in the BSS of the AP the coordinated AP set protects the channel access and frame exchange of the member STA corresponding to the TWT SP within the R-TWT SP through the specific action or measure |
| | | | 2) strong need | |
| | | | 3) regular need | |
| | | 2) non-exclusive R-TWT (that is, the SP of the R-TWT established by the AP in the cooperated AP set and the SP thereof are allowed to be overlapped in time) | | |

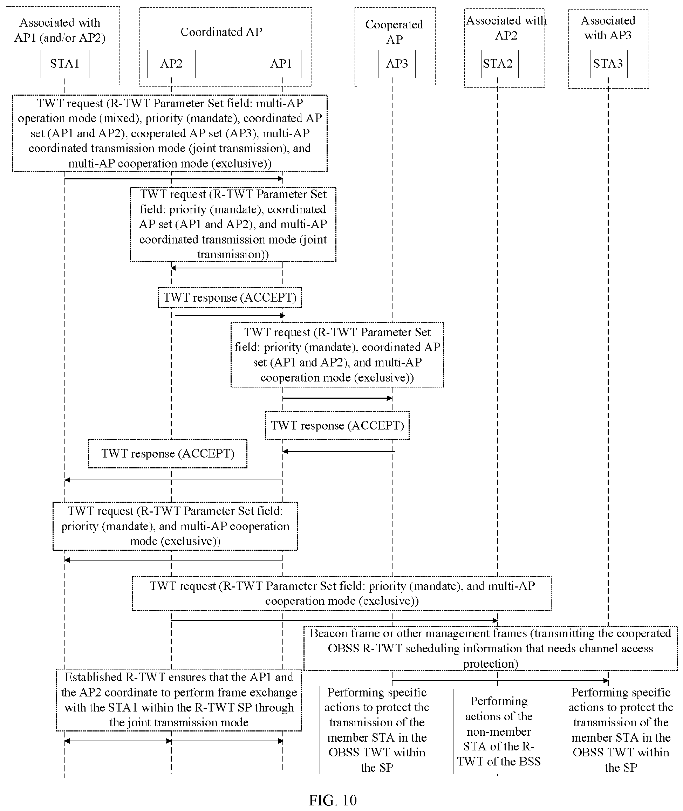

Referring to FIG. 10, FIG. 10 is a schematic flowchart of establishment and operation of an R-TWT service period (SP) based on a multi-AP operation according to the embodiments of the present disclosure.

As shown in FIG. 10, the STA1 is associated with the AP1(and/or the AP2), the AP1 and the AP2 cooperate to transmit information to STA1, and the BSS of the AP3 is the OBSS of the BSS of the AP1. The STA2 is associated with the AP2, and the STA3 is associated with the AP3. The STA1 transmits a TWT request frame to the AP1 to request to establish the R-TWT based on the multi-AP operation. The TWT request carries TWT elements containing an R-TWT Parameter Set field. The information of the Multi-AP Operation Information subfield in the R-TWT Parameter Set field includes: the multi-AP operation mode being the mixed mode; the priority being mandate; the coordinated AP set including the AP1 and the AP2; the cooperated AP set including the AP3; and the multi-AP coordinated transmission mode being joint transmission, and the multi-AP cooperation mode being exclusive. After receiving the TWT request frame, the AP1 transmits the corresponding TWT request with the corresponding coordinating AP and cooperating AP based on the coordinated AP set information and cooperated AP set information carried in the TWT request frame. After receiving the TWT response instructing to accept, the AP1 transmits the TWT response instructing to accept.

After the STA1 and the AP1 establish the R-TWT, the AP1 and the AP2 in the coordinated AP set carry the broadcast TWT elements (including the R-TWT Parameter Set field) in the respective BSS through the beacon frame or other management frames to broadcast established R-TWT information. The established R-TWT ensures that the AP1 and the AP2 coordinate to perform frame exchange with the STA1within the R-TWT SP using the joint transmission mode. The AP3 in the cooperated AP set transmits the cooperated OBSS R-TWT scheduling information (corresponding to the R-TWT scheduling information established by the STA1) that needs channel access protection through the beacon frame or other management frames. The STA in the BSS of the AP3 perform specific actions to protect the transmission of the member STA in the OBSS TWT (that is, the STA1) within the SP.

Compared with the scheme that R-TWT negotiation and establishment are only performed between a single AP and an associated non-AP STA within a BSS, in the R-TWT establishment and operation method based on the multi-AP operation according to the embodiments of the present disclosure, the problem of how to coordinate and operate of a plurality of coordinating APs and/or how to coordinate of a plurality of cooperating APs to establish and operate the R-TWT in multi-AP scenario is solved, and the interference caused by the OBSS to transmission of member STAs within the R-TWT SP is avoided or reduced.

In summary, in the technical solutions according to the embodiments of the present disclosure, the first AP device establishes the protected predetermined service period based on the multi-AP operation for the first STA device, such that the predetermined service period protecting the frame exchange of the first STA device is extended to a plurality of APs. As such, a protection range of the frame exchange is enlarged, a transmission interference between STAs is mitigated to reduce a transmission delay of STAs, and a transmission efficiency of the STA is improved.

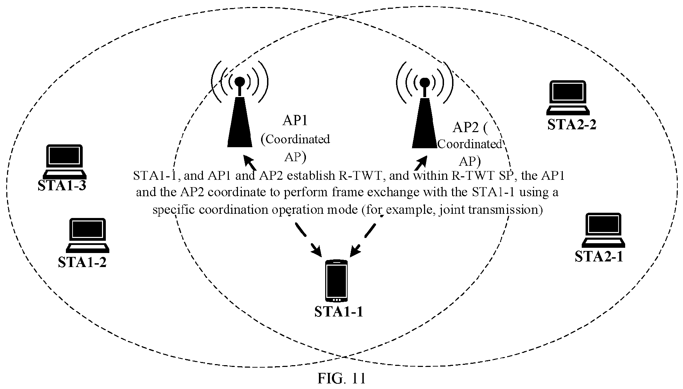

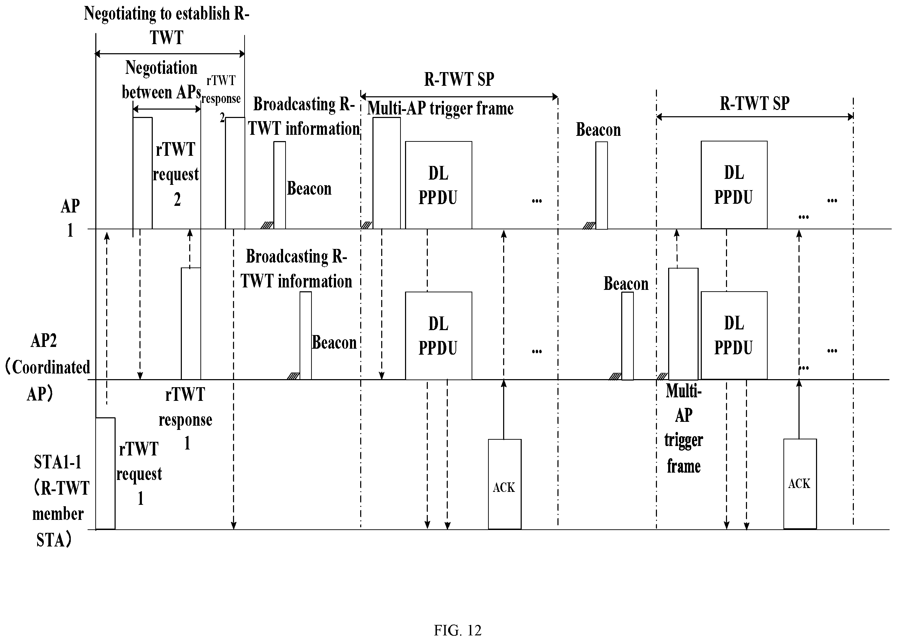

Based on the schemes shown in FIG. 3 to FIG. 6, it is assumed that the AP1 and the AP2 are two APs performing the multi-AP operation, the STA1-1, the STA1-2, and the STA1-3 are associated with the AP1, the STA2-1 and the STA2-2 are associated with the AP2, and the STA1-1 is associated with the AP2 for the joint transmission in the multi-AP cooperated transmission. The R-TWT operation modes based on the multi-AP operation are as follows.
(1) Mode 1 (multi-AP coordination). The AP1 and the AP2 performing the multi-AP coordination jointly establish the protected predetermined service period, for example, the R-TWT SP. That is, the AP1 and the AP2 coordinate to perform frame exchange with the member STA within the protected predetermined service period (for example, the R-TWT SP) using the specific coordination-based operation mode. The AP1 and the AP2 perform coordination operation in the time domain, the spatial domain, and the frequency domain, as shown in FIG. 11 and FIG. 12. For example, the AP1 and the AP2 transmit the member STA STA1-1 corresponding to the R-TWT SP within the R-TWT SP through the joint transmission or the coordinated beamforming, and the schematic diagram of the R-TWT operation scenario based on the multi-AP coordination is shown in FIG. 11; or, the AP1 and the AP2 transmit the member STA STA1-1 and the STA2-1 corresponding to the R-TWT SP within the R-TWT SP through the coordinated OFDMA, the coordinated MIMO, or the coordinated spatial reuse.

For the multi-AP coordinated transmission, the coordinated transmission initiator AP (the sharing AP) transmits the frame triggering coordinated transmission to the shared AP upon gaining the TXOP by channel contention for coordinated transmission. Therefore, for scheduled or predetermined multi-AP coordinated transmission, the key to scheduling for the multi-AP coordinated transmission is that one of the plurality of APs gains the TXOP at the scheduled time, and other APs respond to the frame initiated by the AP for triggering the coordinated transmission and perform the coordinated transmission. Thus, for the mode 1, the R-TWT is jointly established by the plurality of APs participating in the coordinated transmission, and thus each AP participating in the multi-AP coordinated transmission needs to perform the behavior of R-TWT scheduling AP.

As shown in FIG. 11, the STA-1, and the AP1 and the AP2 based on the coordination operation jointly establish the protected predetermined service period (for example, the R-TWT SP). That is, within the predetermined service period (for example, the R-TWT SP), the AP1 and the AP2 cooperate to perform frame exchange with the member STA (the STA1-1) using a specific coordination operation mode.

The main flowchart of establishing a multi-AP coordination-based R-TWT and schematic operations by the STA1-1 are shown in FIG. 12. It is assumed that the AP1 and the AP2 have performed the process established by the multi-AP coordinated transmission (for example, the joint transmission). The STA1-1 first transmits an R-TWT request to the AP1 associated with the STA1-1, and the AP1 and the AP2 negotiate to establish the multi-AP coordination-based R-TWT after the AP1 receives the R-TWT request. The multi-AP coordinated transmission mode (for example, the joint transmission) within the R-TWT SP may be specified. In a case where the AP1 and the AP2 agree to establish the multi-AP coordination-based R-TWT, the AP1 transmits the R-TWT response to the STA1-1 to confirm successful establishment of the R-TWT. After the multi-AP coordination-based R-TWT is established, the AP1 and the AP2 broadcast the established R-TWT information in the respective BSS by carrying the broadcast TWT element in the beacon frame. The AP1 and AP2 preferentially communicate with the R-TWT member STA (for example, the STA1-1) within the R-TWT SP using a predetermined coordinated transmission mode (for example, joint transmission) for transmission of delay sensitive service data, or, only the AP1 and AP2 are allowed to communicate with the R-TWT member STA (for example, the STA1-1) within the R-TWT SP using a predetermined coordinated transmission mode (for example, joint transmission) for transmission of delay sensitive service data. As shown in the drawing, the AP1 or the AP2 gains the TXOP at the start of the R-TWT SP, and starts joint transmission of the AP1 and the AP2 to the STA1-1 by transmitting a plurality of AP trigger frames (or referred to as the multi-AP coordinated transmission trigger frames).

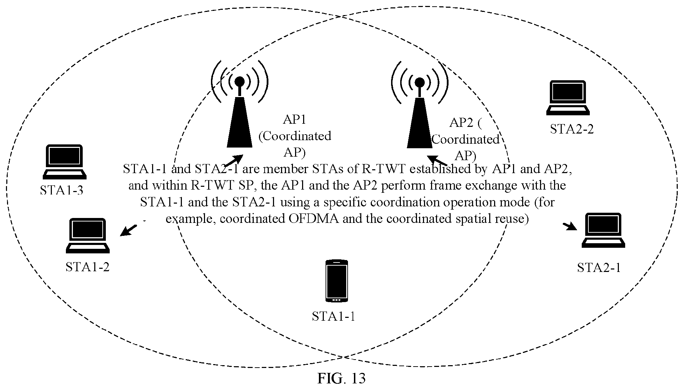

As shown in FIG. 13, FIG. 13 is an operation scenario of a multi-AP coordination-based (for example, C-OFDMA or C-SR) R-TWT. The AP1 and the AP2 establish a protected multi-AP coordination-based protected predetermined service period (for example, the R-TWT SP), and the STA1-2 and the STA2-1 are member STAs of the predetermined service period (for example, the R-TWT SP). The multi-AP coordinated transmission adopts the coordinated OFDMA or the C-SR. The AP1 and the AP2 communicate with the STA1-2 and the STA2-1 respectively for transmission of the delay sensitive service data within the service cycle using a specific coordination-based operation mode (for example, the coordinated OFDMA or the coordinated spatial reuse).

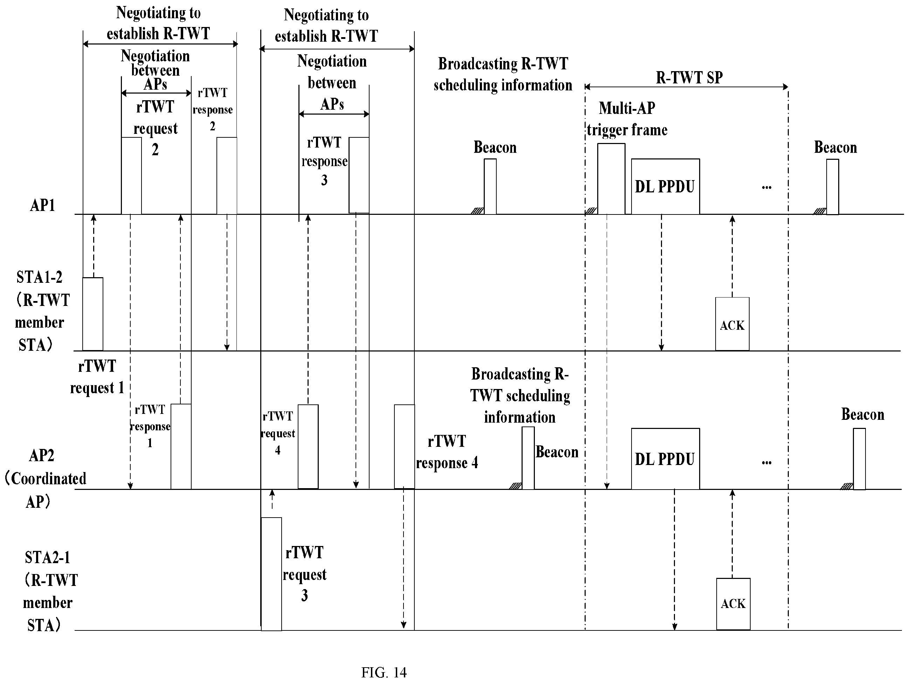

The schematic diagram of establishment and operations of a multi-AP coordination-based (for example, the C-OFDAM or the C-SR) R-TWT by the STA1-2 and the STA2-1 are shown in FIG. 14. It is assumed that the AP1 and the AP2 have performed the process established by the multi-AP coordinated transmission (for example, the C-OFDAM or the C-SR). The STA1-2 first transmits an R-TWT request to the AP1 associated with the STA1-2, and the AP1 and the AP2 negotiate to establish the multi-AP coordination-based R-TWT after the AP1 receives the R-TWT request. The multi-AP coordinated transmission mode (for example, the C-OFDAM or the C-SR) within the R-TWT SP may be specified. In a case where the AP1 and the AP2 agree to establish the multi-AP coordination-based R-TWT, the AP1 transmits the R-TWT response to the STA1-2 to confirm successful establishment of the R-TWT. The STA2-1 first transmits an R-TWT request to the AP1 associated with the STA2-1, and the AP1 and the AP2 negotiate to establish the multi-AP coordination-based R-TWT after the AP1 receives the R-TWT request. The multi-AP coordinated transmission mode (for example, the C-OFDAM or the C-SR) within the R-TWT SP may be specified. In a case where the AP1 and the AP2 agree to establish the multi-AP coordination-based R-TWT, the AP1 transmits the R-TWT response to the STA1-2 to confirm successful establishment of the R-TWT. Similarly, the STA2-1 transmits an R-TWT request to the AP2 associated with the STA2-1, and the AP2 and the AP1 negotiate to establish the multi-AP coordination-based R-TWT after the AP2 receives the R-TWT request. In a case where the AP1 and the AP2 agree to establish the multi-AP coordination-based R-TWT, the AP2 transmits the R-TWT response to the STA2-1 to confirm successful establishment of the R-TWT, that is, the STA2-1 becomes a member of the established R-TWT SP).

After the multi-AP coordination-based R-TWT is established, the AP1 and the AP2 broadcast the established R-TWT information in the respective BSS by carrying the broadcast TWT element in the beacon frame. The AP1 and AP2 preferentially communicate with the associated R-TWT member STA (for example, the STA1-2 and the STA2-1) within the R-TWT SP using a predetermined coordinated transmission mode (for example, the C-OFDAM or the C-SR) for transmission of delay sensitive service data, or, only the AP1 and AP2 are allowed to communicate with the associated R-TWT member STA (for example, the STA1-2 and the STA2-1) within the R-TWT SP using a predetermined coordinated transmission mode (for example, the C-OFDAM or the C-SR) for transmission of delay sensitive service data. As shown in the drawing, the AP1 or the AP2 gains the TXOP at the start of the R-TWT SP, and starts joint transmission of the AP1 and the AP2 to the associated STA1-2 and STA2-1 by transmitting a plurality of AP trigger frames (or referred to as the multi-AP coordinated transmission trigger frames).

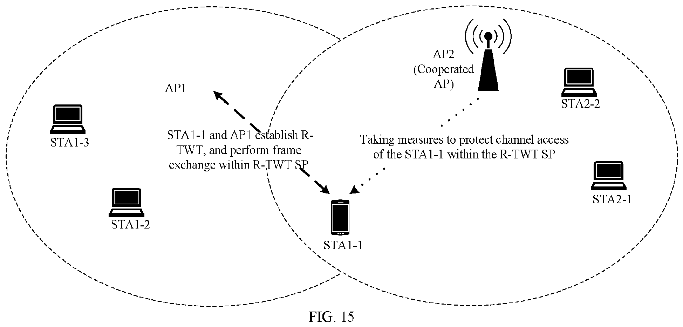

(2) Mode 2 (multi-AP cooperation). The AP1 and the AP2 respectively establish the protected predetermined service period, for example, the R-TWT SP. The AP1 and the associated STA establish the R-TWT, and the AP1 shares information of the established R-TWT SP to the AP2, and the AP2 protects channel access of the AP1 and the corresponding member STA within the R-TWT SP established by the AP1 by controlling behaviors thereof and behaviors of the associated STA. As shown in FIG. 15, FIG. 15 is a schematic diagram of an operation scenario of a multi-AP cooperation-based R-TWT.

The mode 2: scenario 1. As shown in FIG. 15, the AP1 cooperates with the AP2 in establishing a protected predetermined service period (for example, the R-TWT SP). The STA1-1 is a member STA of the predetermined service period (for example, the R-TWT SP), and performs frame exchange with the AP1 within the R-TWT SP to preferentially transmit delay sensitive service data. The AP2 is the cooperating AP, and takes measures on the BSS of the AP2 to protect channel access and communication of the STA1-1 within the R-TWT SP, for example, restricting communication of the relevant STA in the BSS of the AP2 within the R-TWT SP established by the AP1 and the STA1-1, or adjusting the transmit power of the relevant STA. For the AP2 and the associated STA, the R-TWT established by the AP1 and the STA1-1 is the OBSS R-TWT.

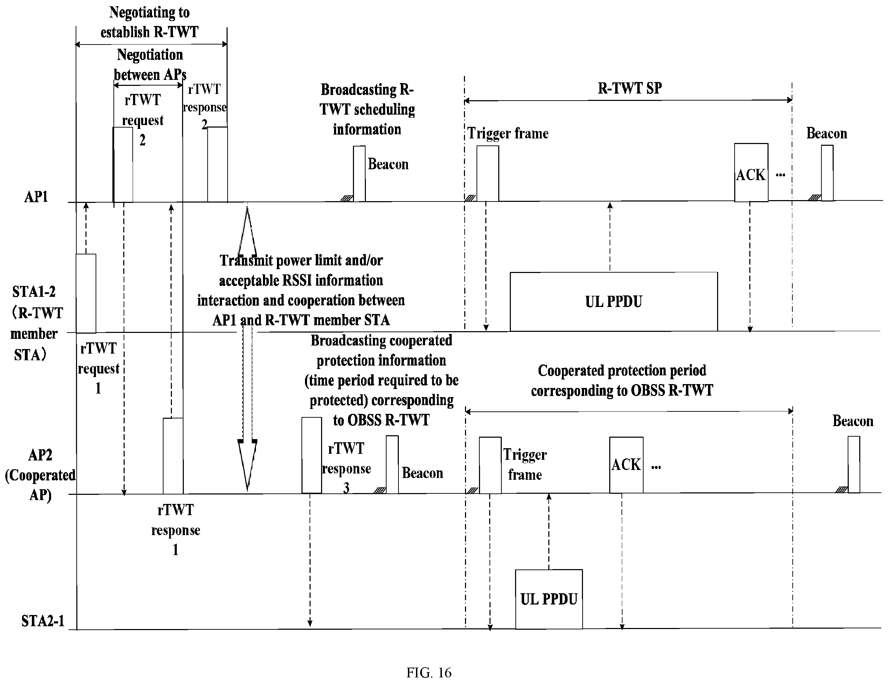

The main flowchart of establishment and operations of a multi-AP cooperation-based R-TWT and schematic operations are shown in FIG. 16. It is assumed that the AP1 and the AP2 support a spatial reuse operation, and the STA1-1 and the AP1 preparing to establish the R-TWT and relevant STAs associated with the AP2 and/or the AP2 (note: the relevant STA refers to an STA whose initiated transmissions interferes with communication between the STA1-1 and the AP1) determine the transmit power limits and/or acceptable receive signal strength indicator (RSSI) for spatial reuse. The STA1-1 first transmits an R-TWT request to the AP1 associated with the STA1-1, and the AP1 and the AP2 negotiate to establish the multi-AP cooperation-based R-TWT after the AP1 receives the R-TWT request. The AP1 and the AP2 may negotiate to determine the transmission mode of the spatial reuse within the R-TWT SP, determine that the transmission of the STA1-1 within the R-TWT service cycle meets the transmit power limits and/or acceptable RSSI specified by the spatial reuse, and determine that the transmission of the AP2 and the relevant STA (note: the relevant STA refers to an STA whose initiated transmissions interferes with communication between the STA1-1 and the AP1) within the protected time period corresponding to the R-TWT SP meets the transmit power limits and/or acceptable RSSI specified by the spatial reuse determine. In a case where the AP1 and the AP2 agree to establish the multi-AP cooperation-based R-TWT, the AP1 transmits the R-TWT response to the STA1-1 to confirm successful establishment of the R-TWT. In this case, the AP2 establishes the R-TWT of the BSS of the AP2 by transmitting an un-request R-TWT response to establish a cooperated protection period corresponding to the OBSS R-TWT (that is, the R-TWT established by the AP1 and the STA1-1), and designates an STA meeting the spatial reuse transmission requirement (that is, meeting the transmit power limits and/or acceptable RSSI) as the member STA. The R-TWT SP established by the AP1 and the cooperated protection period established by the AP2 (that is, the R-TWT SP established by the AP2 on the BSS thereof) are time-consistent, that is, the start times and the end times are respectively synchronized. The AP2 terminates the TXOP in a case where the AP2 is a TXOP holder before the start time of the cooperated protection period, such that the AP1 acquires the TXOP after the R-TWT SP start time to perform frame exchange with the R-TWT member STA.

After the multi-AP cooperation-based R-TWT is established, the AP1 broadcasts the established R-TWT information in the BSS by carrying the broadcast TWT element in the beacon frame; and the AP2 broadcasts the established R-TWT period information, that is, the cooperation protection period information (for example, the time period required to be protected) corresponding to the OBSS R-TWT (that is, the R-TWT of the BSS of the AP1), in the BSS by the beacon frame. The involved STA (note: the involved STA refers to an STA whose transmission may cause interference on communications of member STAs within the R-TWT SP of the BSS of the AP1) adopts the spatial reuse mode within time period required to be protected. That is, the transmit power of the involved STA is restricted. In particular, in some examples, the transmit power of the AP2 within the time period required to be protected is restricted to meet the transmission requirement of the spatial reuse.

For the BSS of the AP1, the AP1 preferentially communicates with the R-TWT member STA STA1-1 to transmit the delay -sensitive service data within the R-TWT SP, and the transmit power of the STA1-1 meets the transmit power limit requirement of the spatial reuse. In particular, the AP1 designates the uplink transmit power limit of the STA1-1 in the trigger frame transmitted in the R-TWT SP. For the BSS of the AP2, within the time period required to be protected corresponding to the OBSS R-TWT, only communications between the involved STA (note: the involved STA refers to an STA whose transmission may cause interference on communications of member STAs within the R-TWT SP of the BSS of the AP1) that meet the transmission requirement of the spatial reuse and another STA with transmission causing no interference to communications of member STAs within the R-TWT SP of the BSS of the AP1 are allowed or preferentially allowed. In particular, in some examples, transmission of the AP2 should meet the transmit power limit requirement of the spatial reuse. In this case, the AP2 adopts the trigger- based transmission mode, and optionally carry the uplink transmit power limit information of the involved STA (for example, the STA2-1 in FIG. 16, that is, the member STA of the cooperation protection operation) that meets the transmission requirement of the spatial reuse in the trigger frame to trigger the STA that meets the transmission requirement of the spatial reuse (for example, the STA2-1 in FIG. 16) to perform uplink transmission.

The mode 2: scenario 2.

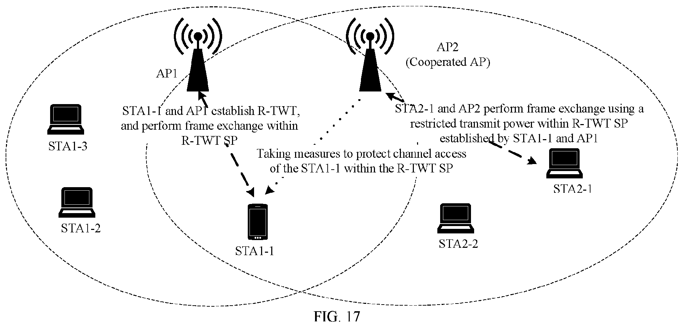

Referring to FIG. 17, FIG. 17 is a schematic diagram of an operation scenario of a multi-AP cooperation-based R-TWT according to some embodiments of the present disclosure. As shown in FIG. 17, the AP1 cooperates with the AP2 in establishing a protected predetermined service period (for example, the R-TWT SP). The STA1-1 is a member STA of the predetermined service period (for example, the R-TWT SP), and performs frame exchange with the AP1 within the R-TWT SP to preferentially transmit delay sensitive service data. The AP2 is the cooperating AP, and takes measures on the BSS of the AP2 to protect channel access and communication of the STA1-1 within the R-TWT SP, and performs restricted transmission with the STA that meets the transmission requirement in the BSS. For example, the STA2-1 and the AP2 perform frame exchange using a restricted transmit power within the R-TWT SP established by the STA1-1 and the AP1.

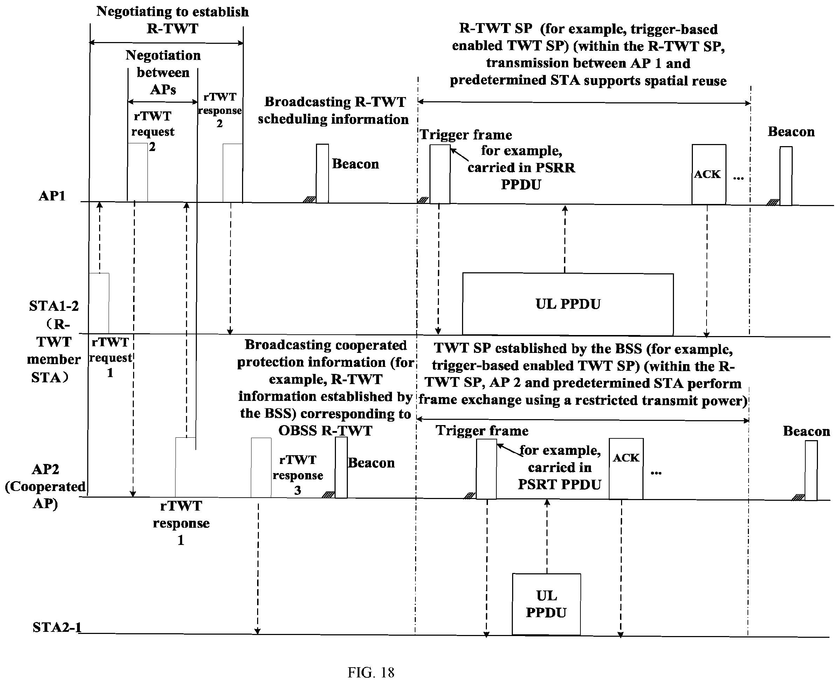

The main flowchart of establishment and operations of a multi-AP cooperation-based R-TWT and schematic operations are shown in FIG. 18. It is assumed that the AP1 and the AP2 support the establishment and operations of the multi-AP cooperation-based R-TWT and the spatial reuse operation, for example, parameterized spatial reuse. The STA1-1 first transmits an R-TWT request to the AP1 associated with the STA1-1, and the AP1 and the AP2 negotiate to establish the multi-AP cooperation-based R-TWT after the AP1 receives the R-TWT request. The AP1 and the AP2 may negotiate to determine the transmission mode (for example, preferred spatial reuse (PSR)) of the spatial reuse within the R-TWT SP, preferentially ensure or only allow that the AP1 and the STA1-1 transmit information within the R-TWT SP with the transmission requirement (for example, the transmission requirement specified in PSR operation) meeting the spatial reuse requirement, and the AP2 and the relevant STA (note: the relevant STA refers to an STA whose initiated transmissions interferes with communication between the STA1-1 and the AP1) transmit information within the to-be-protected time period corresponding to the R-TWT SP with the transmit power limit requirement meeting the spatial reuse requirement. In a case where the AP1 and the AP2 agree to establish the multi-AP cooperation-based R-TWT, the AP1 transmits the R-TWT response to the STA1-1 to confirm successful establishment of the R-TWT. In this case, the AP2 establishes the R-TWT of the BSS of the AP2 by transmitting an un-request R-TWT response to establish a cooperated protection period corresponding to the OBSS R-TWT (that is, the R-TWT established by the AP1 and the STA1-1). The R-TWT SP established by the AP1 and the cooperated protection period established by the AP2 (that is, the R-TWT SP established by the AP2 on the BSS thereof) are time-consistent, that is, the start times and the end times are respectively synchronized. For ensuring that the AP1 acquires the TXOP after the R-TWT SP start time to perform frame exchange with the R-TWT member STA, the AP2 takes one or more of the following measures: a) the AP2 terminates the TXOP in a case where the AP2 is a TXOP holder before the start time of the cooperated protection period; b) the AP2 keeps silent for a specific time after the start time of the cooperation protection period; and c) the AP2 adopts an EDCA parameter with lower priority than the AP1 for channel contention within the cooperation protection period.

In particular, the R-TWT SP established by the AP2 in the BSS thereof may be a trigger-based enabled R-TWT period, and any STA associated with the AP2 and supporting the R-TWT may be a member of the cooperated protection period so that the AP2 performs a trigger-based transmission to the STA that meets the transmission requirement of the spatial reuse. In addition, the TXOP is terminated in a case where the STA is a TXOP holder before the R-TWT SP start time; and transmission of an STA that is associated with the AP2 and does not support the R-TWT within the R-TWT SP is restricted by scheduling a silent interval overlapped with the R-TWT SP (that is, the cooperation protection period) by the AP2.

After the multi-AP cooperation-based R-TWT is established, the AP1 broadcasts the established R-TWT information in the BSS by carrying the broadcast TWT element in the beacon frame; and the AP2 broadcasts the established R-TWT period information, that is, the cooperation protection period information (for example, the time period required to be protected) corresponding to the OBSS R-TWT (that is, the R-TWT of the BSS of the AP1), in the BSS by the beacon frame. The involved STA (note: the involved STA refers to an STA whose transmission may cause interference on communications of member STAs within the R-TWT SP of the BSS of the AP1) adopts the spatial reuse mode within time period required to be protected. That is, the transmit power of the involved STA is restricted. In particular, in some examples, the transmit power of the AP2 within the time period required to be protected is restricted to meet the transmission requirement of the spatial reuse.

For the BSS of the AP1, the AP1 preferentially communicates with the R-TWT member STA STA1-1 to transmit the delay -sensitive service data within the R-TWT SP, and transmission of the AP1 and the STA1 -1 meets the transmission requirement supporting the spatial reuse. In particular, for the PSR, the AP1 instructs to adopt the PSR spatial reuse and determines a transmit power limit for the parameterized spatial reuse transmission (PSRT) PPDU in the trigger frame (carried in the parameterized spatial reuse reception (PSRR) PPDU) transmitted in the R-TWT SP.

For the BSS of the AP2, within the time period required to be protected corresponding to the OBSS R-TWT, only communications between the involved STA (note: the involved STA refers to an STA whose transmission may cause interference on communications of member STAs within the R-TWT SP of the BSS of the AP1) that meets the transmission requirement of the spatial reuse and/or another STA with transmission causing no interference to communications of member STAs within the R-TWT SP of the BSS of the AP1 are allowed or preferentially allowed. In particular, in some examples, transmission of the AP2 should meet the transmit power limit requirement of the spatial reuse. In this case, the AP2 adopts the trigger- based transmission mode, and optionally carry the uplink transmit power limit information of the involved STA (for example, the STA2-1 in FIG. 18, that is, the member STA of the cooperation protection operation) that meets the transmission requirement of the spatial reuse in the trigger frame to trigger the STA that meets the transmission requirement of the spatial reuse (for example, the STA2-1 in FIG. 18) to perform uplink transmission. In particular, in the case that the AP2 recognizes a PSR opportunity, the AP2 initiates a transmission trigger frame (carried in the PSRT PPDU) in the BSS to trigger uplink transmissions of the STA that meets the PSR transmission requirement (for example, the STA2-1 in FIG. 18).

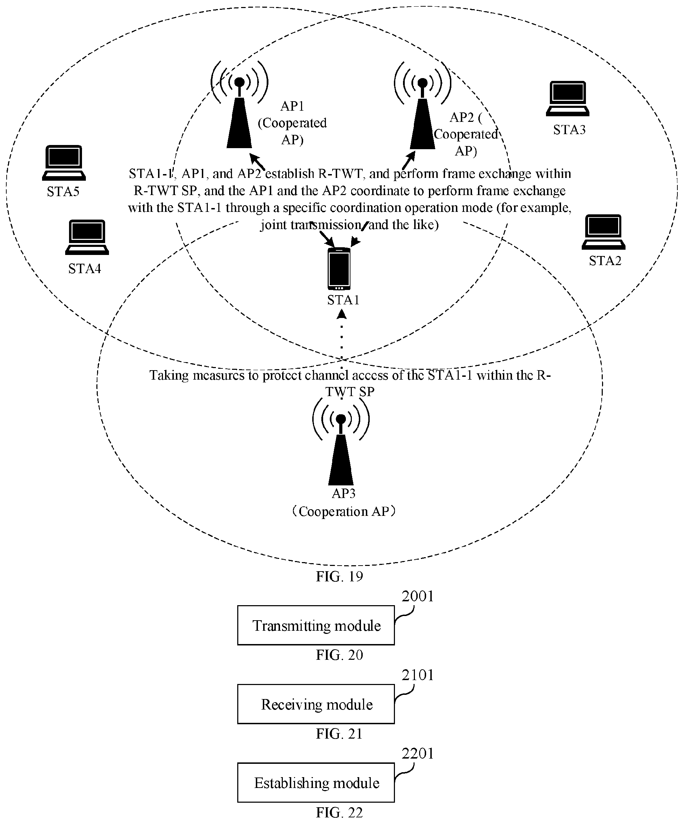

(3) Mixed mode: the plurality of APs forming the coordinated AP set jointly establish and share, and cooperate with one or more APs forming the cooperated AP set to establish and operate the R-TWT. a schematic diagram of a mixed-mode scenario of multi-AP coordination-based and multi-AP cooperation-based is shown in FIG. 19. The AP1 and the AP2 performing the multi-AP coordination jointly establish the protected predetermined service period, for example, the R-TWT SP. That is, the AP1 and the AP2 coordinate to perform frame exchange with the member STA within the protected predetermined service period (for example, the R-TWT SP) using the specific coordination operation mode. The AP3 is the cooperating AP, and performs corresponding channel access protection on coordinated transmission between the AP1 and the AP2 and the corresponding STA (STA1) within the R-TWT SP jointly established by the AP1 and the AP2 by controlling the behaviors of the AP3 and/or the associated relevant STA.

Referring to FIG. 20, FIG. 20 is a block diagram of an operation apparatus based on multiple APs according to some embodiments of the present disclosure. The apparatus has the function of processes applicable to the first AP device in the operation method based on multiple APs. As shown in FIG. 20, the apparatus includes: a transmitting module 2001, configured to transmit a first frame to establish a protected predetermined service period based on a multi-AP operation for a first STA device, wherein the protected predetermined service period based on the multi-AP operation is a protected predetermined service period negotiated and established by the first AP device and at least one second AP device.

In some embodiments, the apparatus further includes an operating module, configured to:
perform a multi-AP coordination-based operation within the protected predetermined service period, wherein the multi-AP coordination-based operation includes preferentially ensuring or only allowing the first AP device and the at least one second AP device to coordinate to perform frame exchange with member STAs, inclusive of the first STA device, within the protected predetermined service period using a specific coordinated transmission mode; or
perform a multi-AP cooperation-based operation within the protected predetermined service period, wherein the multi-AP cooperation-based operation includes preferentially ensuring or only allowing the first AP device to perform frame exchange with member STAs, inclusive of the first STA device, within the protected predetermined service period, and managing or restricting, by the at least one second AP device, transmission of STAs in a basic service set (BSS) of the at least one second AP device to protect communications between the first AP device and the member STAs, inclusive of the first STA device, within the protected predetermined service period; or
in a case where a number of the at least one second AP device is n, perform a multi-AP coordination-based operation with a part of n second AP devices and performing a multi-AP cooperation-based operation with another part of the n second AP devices within the protected predetermined service period, wherein n is greater than or equal to 2.

In some embodiments, in performing the multi-AP coordination-based operation,
a start time and an end time of a first service period in a BSS corresponding to the first AP device are same as a start time and an end time of a second service period within the protected predetermined service period,
wherein the second service period is a service period in the BSS corresponding to the at least one second AP device that performs the multi-AP coordination-based operation with the first AP device within the protected predetermined service period.

In some embodiments, the specific coordinated transmission mode includes at least one of:
coordinated OFDMA, coordinated MIMO, coordinated spatial reuse, joint transmission, or coordinated beamforming.

In some embodiments, the operating module is configured to transmit a second frame to the at least one second AP device in a case of gaining a transmission opportunity, wherein the second frame is used to trigger the first AP device and the at least one second AP device to perform the multi-AP coordination-based operation within the protected predetermined service period.

In some embodiments, the operating module is configured to receive a second frame from the at least one second AP device, wherein the second frame is used to trigger the first AP device and the at least one second AP device to perform the multi-AP coordination-based operation within the protected predetermined service period.

In some embodiments, in performing the multi-AP coordination-based operation, the apparatus further includes:
a scheduling module, configured to annunciate a quiet interval, wherein the quiet interval is used to shield a transmission operation of a second STA device that does not support the protected predetermined service period in a BSS corresponding to the first AP device within the protected predetermined service period.

In some embodiments, the second STA device is an STA device that does not support the protected predetermined service period other than a specified type of STA device,
wherein the specified type of STA device includes at least one of an EHT device or an UHR device.

In some embodiments, in performing the multi-AP cooperation-based operation,
a duration of a first service period in a BSS corresponding to the first AP device is not overlapped with a duration of a third service period within the protected predetermined service period; or
a duration of a first service period in a BSS corresponding to the first AP device is partially overlapped with a duration of a third service period within the protected predetermined service period;
wherein the third service period is a predetermined service period in the BSS of the at least one second AP device that performs the multi-AP cooperation-based operation with the first AP device, and the BSS of the at least one second AP device is an overlapping basic service set (OBSS) of the BSS corresponding to the first AP device.

In some embodiments, the apparatus further includes:
a receiving module, configured to receive a first request from the first STA device, wherein the first request is used to request to establish the protected predetermined service period.

In some embodiments, the first request includes first attribute information of the protected predetermined service period.

In some embodiments, the transmitting module is configured to transmit the first frame to the first STA device, wherein the first frame includes first attribute information of the protected predetermined service period.

In some embodiments, the transmitting module is configured to transmit a transmitting a second request to the at least one second AP device, wherein the second request is used to request the at least one second AP device and the first AP device to collaborate to establish the protected predetermined service period.

In some embodiments, the apparatus further includes:
a period establishing module, configured to establish a first service period in a BSS corresponding to the first AP device within the protected predetermined service period.

In some embodiments, the period establishing module, configured to transmit a first broadcast message for establishing the first service period, wherein the first broadcast message includes first attribute information of the protected predetermined service period.

In some embodiments, the first attribute information of the protected predetermined service period includes at least one of:
a coordinated AP set performing the multi-AP coordination-based operation, the specific coordinated transmission mode, a cooperated AP set performing a local multi-AP cooperation-based operation, or a cooperation mode corresponding to the multi-AP cooperation-based operation.

In some embodiments, the protected predetermined service period is an R-TWT period.

In some embodiments, the first attribute information of the protected predetermined service period is in a Multi-AP Operation Information subfield in a Broadcast TWT Parameter Set field.

In some embodiments, a Broadcast TWT Information subfield in the Broadcast TWT Parameter Set field includes a Multi-AP Operation Information Present subfield, wherein a parameter value of the Multi-AP Operation Information Present subfield indicates whether the Broadcast TWT Parameter Set field includes the Multi-AP Operation Information subfield, and
the Broadcast TWT Parameter Set field includes the Multi-AP Operation Information subfield in a case where the parameter value of the Multi-AP Operation Information Present subfield is a first specified value.

In some embodiments, the Multi-AP Operation Information subfield includes at least one of:
a Multi-AP Operation Control subfield, a Coordinated AP Set Information subfield, or a Cooperated AP Set Information subfield; wherein
the Multi-AP Operation Control subfield includes at least one of a Multi-AP Operation Mode subfield, a Priority subfield, a Coordinated AP Set Information Present subfield, a Cooperated AP Set Information Present subfield, a Multi-AP Coordinated Transmission Mode subfield, a Multi-AP Cooperation Mode subfield, or a Reserved subfield; wherein
the Multi-AP Operation Mode subfield indicates a multi-AP operation mode, wherein the multi-AP operation mode includes the multi-AP coordination-based operation and/or the multi-AP cooperation-based operation;
the Priority subfield indicates priority information of the first STA device;
the Coordinated AP Set Information Present subfield indicates whether the Coordinated AP Set Information subfield is present;
the Cooperated AP Set Information Present subfield indicates whether the Cooperated AP Set Information subfield is present;
the Multi-AP Coordinated Transmission Mode subfield indicates the specific coordinated transmission mode corresponding to the multi-AP coordination-based operation; and
the Multi-AP Cooperation Mode subfield indicates the cooperation mode corresponding to the multi-AP cooperation-based operation;
the Coordinated AP Set Information subfield indicates AP devices in the coordinated AP set; and
the Cooperated AP Set Information subfield indicates AP devices in the cooperated AP set.

In some embodiments, the transmitting module is configured to transmit a first sub-request to the at least one second AP device in a case where the at least one second AP device is an AP device that performs the multi-AP coordination-based operation with the first AP device, wherein the first sub-request is used to request the at least one second AP device to establish a second service period in the BSS corresponding to the at least one second AP device within the protected predetermined service period.

In some embodiments, the first sub-request includes second attribute information of the protected predetermined service period, wherein the second attribute information of the protected predetermined service period includes at least one of:

priority information of the first STA device, a coordinated AP set performing the multi-AP coordination-based operation, or the specific coordinated transmission mode corresponding to the multi-AP coordination-based operation.

In some embodiments, the transmitting module is configured to transmit a second sub-request to the at least one second AP device in a case where the at least one second AP device is an AP device that performs the multi-AP cooperation-based operation with the first AP device, wherein the second sub-request includes third attribute information of the protected predetermined service period, wherein the third attribute information of the protected predetermined service period includes at least one of priority information of the first STA device or a cooperation mode corresponding to the multi-AP cooperation-based operation.

Referring to FIG. 21, FIG. 21 is a block diagram of an operation apparatus based on multiple APs according to some embodiments of the present disclosure. The apparatus has the function of processes applicable to the first STA device in the operation method based on multiple APs. As shown in FIG. 21, the apparatus includes: a receiving module 2101, configured to receive a first frame, wherein the first frame indicates that a first AP device has established a protected predetermined service period based on a multi-AP operation for the first STA device, wherein the protected predetermined service period based on the multi-AP operation is a protected predetermined service period negotiated and established by the first AP device and at least one second AP device.

In some embodiments, the apparatus further includes:
accepting a multi-AP coordination-based operation within the protected predetermined service period, wherein the multi-AP coordination-based operation includes preferentially ensuring or only allowing the first AP device and the at least one second AP device to coordinate to perform frame exchange with member STAs, inclusive of the first STA device, within the protected predetermined service period using a specific coordinated transmission mode; or
accepting a multi-AP cooperation-based operation within the protected predetermined service period, wherein the multi-AP cooperation-based operation includes preferentially ensuring or only allowing the first AP device to perform frame exchange with member STAs, inclusive of the first STA device, within the protected predetermined service period, and managing or restricting, by the at least one second AP device, transmission of STAs in a basic service set (BSS) of the at least one second AP device to protect communications between the first AP device and the member STAs, inclusive of the first STA device, within the protected predetermined service period; or
in a case where a number of the at least one second AP device is n, accepting a multi-AP coordination-based operation of the first AP device and a part of n second AP devices and accepting a multi-AP cooperation-based operation of the first AP device and another part of the n second AP devices within the protected predetermined service period, wherein n is greater than or equal to 2.

In some embodiments, the specific coordinated transmission mode includes at least one of:
coordinated OFDMA, coordinated MIMO, coordinated spatial reuse, joint transmission, or coordinated beamforming.

In some embodiments, the apparatus further includes: a transmitting module, configured to transmit a first request to the first AP device, wherein the first request is used to request to establish the protected predetermined service period.

In some embodiments, the first request includes first attribute information of the protected predetermined service period.

In some embodiments, the first frame includes first attribute information of the protected predetermined service period.

In some embodiments, the first attribute information of the protected predetermined service period includes at least one of: a coordinated AP set performing the multi-AP coordination-based operation, the specific coordinated transmission mode, a cooperated AP set performing a local multi-AP cooperation-based operation, or a cooperation mode corresponding to the multi-AP cooperation-based operation.

In some embodiments, the protected predetermined service period is an R-TWT period.

In some embodiments, the first attribute information of the protected predetermined service period is in a Multi-AP Operation Information subfield in a Broadcast TWT Parameter Set field.

In some embodiments, a Broadcast TWT Information subfield in the Broadcast TWT Parameter Set field includes a Multi-AP Operation Information Present subfield, wherein a parameter value of the Multi-AP Operation Information Present subfield indicates whether the Broadcast TWT Parameter Set field includes the Multi-AP Operation Information subfield, and
the Broadcast TWT Parameter Set field includes the Multi-AP Operation Information subfield in a case where the parameter value of the Multi-AP Operation Information Present subfield is a first specified value.

In some embodiments, the Multi-AP Operation Information subfield includes at least one of:a Multi-AP Operation Control subfield, a Coordinated AP Set Information subfield, or a Cooperated AP Set Information subfield; wherein
the Multi-AP Operation Control subfield includes at least one of a Multi-AP Operation Mode subfield, a Priority subfield, a Coordinated AP Set Information Present subfield, a Cooperated AP Set Information Present subfield, a Multi-AP Coordinated Transmission Mode subfield, a Multi-AP Cooperation Mode subfield, or a Reserved subfield; wherein
the Multi-AP Operation Mode subfield indicates a multi-AP operation mode, wherein the multi-AP operation mode includes the multi-AP coordination-based operation and/or the multi-AP cooperation-based operation;
the Priority subfield indicates priority information of the first STA device;
the Coordinated AP Set Information Present subfield indicates whether the Coordinated AP Set Information subfield is present;
the Cooperated AP Set Information Present subfield indicates whether the Cooperated AP Set Information subfield is present;
the Multi-AP Coordinated Transmission Mode subfield indicates the specific coordinated transmission mode corresponding to the multi-AP coordination-based operation; and
the Multi-AP Cooperation Mode subfield indicates the cooperation mode corresponding to the multi-AP cooperation-based operation;
the Coordinated AP Set Information subfield indicates AP devices in the coordinated AP set; and
the Cooperated AP Set Information subfield indicates AP devices in the cooperated AP set.

Referring to FIG. 22, FIG. 22 is a block diagram of an operation apparatus based on multiple APs according to some embodiments of the present disclosure. The apparatus has the function of processes applicable to the second AP device in the operation method based on multiple APs. As shown in FIG. 22, the apparatus includes: an establishing module 2201, configured to establish a protected predetermined service period based on a multi-AP operation for a first STA device by collaborating with a first AP device, wherein the protected predetermined service period based on the multi-AP operation is a protected predetermined service period negotiated and established by the first AP device and at least one second AP device.

In some embodiments, the apparatus further includes an operating module, configured to:
perform a multi-AP coordination-based operation within the protected predetermined service period, wherein the multi-AP coordination-based operation includes preferentially ensuring or only allowing the first AP device and the second AP device to coordinate to perform frame exchange with member STAs, inclusive of the first STA device, within the protected predetermined service period using a specific coordinated transmission mode; or
perform a multi-AP cooperation-based operation within the protected predetermined service period, wherein the multi-AP cooperation-based operation includes preferentially ensuring or only allowing the first AP device to perform frame exchange with member STAs, inclusive of the first STA device, within the protected predetermined service period, and managing or restricting, by the second AP device, transmission of STAs in a basic service set (BSS) of the second AP device to protect communications between the first AP device and the member STAs, inclusive of the first STA device, within the protected predetermined service period.

In some embodiments, in performing the multi-AP coordination-based operation, a start time and an end time of a first service period in a BSS corresponding to the first AP device are same as a start time and an end time of a second service period within the protected predetermined service period, wherein the second service period is a service period in the BSS corresponding to the second AP device within the protected predetermined service period.

In some embodiments, the specific coordinated transmission mode includes at least one of: coordinated orthogonal frequency division multiple access (OFDMA), coordinated multi-user multiple-in multiple-out (MIMO), coordinated spatial reuse, joint transmission, or coordinated beamforming.

In some embodiments, the operating module is configured to transmit a second frame to the first AP device in a case of gaining a transmission opportunity, wherein the second frame is used to trigger the first AP device and the second AP device to perform the multi-AP coordination-based operation within the protected predetermined service period.

In some embodiments, the operating module is configured to receive a second frame from the second AP device, wherein the second frame is used to trigger the first AP device and the second AP device to perform the multi-AP coordination-based operation within the protected predetermined service period.

In some embodiments, the apparatus further includes: a scheduling module, configured to annunciate a quiet interval, wherein the quiet interval is used to shield a transmission operation of a second STA device that does not support the protected predetermined service period in the BSS corresponding to the second AP device within the protected predetermined service period.

In some embodiments, the second STA device is an STA device that does not support the protected predetermined service period other than a specified type of STA device, wherein the specified type of STA device includes at least one of an EHT device or an UHR device.

In some embodiments, in performing the multi-AP cooperation-based operation, a duration of a first service period in a BSS corresponding to the first AP device is not overlapped with a duration of a third service period within the protected predetermined service period; or a duration of a first service period in a BSS corresponding to the first AP device is partially overlapped with a duration of a third service period within the protected predetermined service period; wherein the third service period is a predetermined service period in the BSS of the second AP device, and the BSS of the second AP device is an overlapping basic service set (OBSS) of the BSS corresponding to the first AP device.

In some embodiments, in performing the multi-AP coordination-based operation within the protected predetermined service period, the establishing module 2201 is configured to transmit a second broadcast message for establishing a second service period, wherein the second service period is a service period in the BSS corresponding to the second AP device within the protected predetermined service period.

In some embodiments, in performing the multi-AP cooperation-based operation within the protected predetermined service period, the apparatus further includes a transmitting module, configured to transmit a third broadcast message, wherein the third broadcast message is used to manage or restrict transmission of STAs in the BSS of the second AP device within the protected predetermined service period.

In some embodiments, the apparatus further includes: a receiving module, configured to receive a second request from the first AP device, wherein the second request is used to request to collaborate to establish the protected predetermined service period with the first AP device.

In some embodiments, the receiving module is configured to receive a first sub-request from the first AP device in a case where the second AP device is an AP device that performs the multi-AP coordination-based operation with the first AP device, wherein the first sub-request includes second attribute information of the protected predetermined service period, wherein the second attribute information of the protected predetermined service period includes at least one of: priority information of the first STA device, a coordinated AP set performing the multi-AP coordination-based operation, or the specific coordinated transmission mode corresponding to the multi-AP coordination-based operation.

In some embodiments, the receiving module is configured to receive a second sub-request from the first AP device in a case where the second AP device is an AP device that performs the multi-AP coordination-based operation with the first AP device, wherein the second sub-request includes third attribute information of the protected predetermined service period, wherein the third attribute information of the protected predetermined service period includes at least one of: priority information of the first STA device or a cooperation mode corresponding to the multi-AP cooperation-based operation.

In some embodiments, the protected predetermined service period is an R-TWT period.

It should be noted that, in a case where the apparatus according to the above embodiments implements the functions thereof, the division of the functional modules is merely exemplary. In practice, the above functions may be assigned to and completed by different functional modules according to actual needs, that is, the internal structure of the apparatus may be divided into different functional modules, to implement all or a part of the above functions.

With regard to the apparatus in the above embodiments, the specific scheme in which each module performs the operation has been described in detail in the embodiments related to the method and will not be described in detail herein.

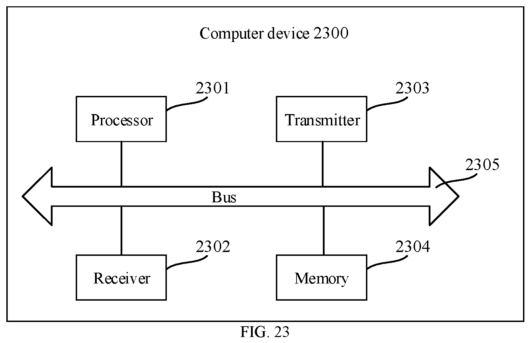

FIG. 23 is a schematic structural diagram of a computer device 2300 according to some embodiments of the present disclosure. The computer device 2300 includes: a processor 2301, a receiver 2302, a transmitter 2303, a memory 2304, and a bus 2305.

The processor 2301 includes one or more processing cores, and achieves various functional applications and information processing by running software programs and modules.

The receiver 2302 and the transmitter 2303 are practiced as a communication assembly. The communication assembly is a communication chip, and the communication chip is also referred to as a transceiver.

The memory 2304 is connected to the processor 2301 over the bus 2305.

The memory 2304 is configured to store one or more computer programs, and the processor 2301 is configured to load and run the one or more computer programs to perform various processes applicable to the STA device or the AP device in the above method embodiments.

In addition, the memory 2304 is practiced by any type of volatile or non-volatile storage device or combinations thereof. The volatile or non-volatile storage device includes but is not limited to a disk or optical disc, an electrically erasable programmable read-only memory, an erasable programmable read-only memory, a static random-access memory, a read-only memory, a magnetic memory, a flash memory, or a programmable read-only memory (PROM).

In some embodiments, the computer device includes a processor, a memory, and a transceiver (the transceiver includes a receiver for receiving information and a transmitter for transmitting information).

In some embodiments, in a case where the computer device is an AP device, and the AP device is the first AP device in the method embodiments, the transceiver is configured to transmit the first frame to establish a protected predetermined service period based on a multi-AP operation for a first STA device. The protected predetermined service period based on the multi-AP operation is a protected predetermined service period negotiated and established by the first AP device and at least one second AP device.

In some embodiments, in a case where the computer device is an AP device, and the AP device is the second AP device in the method embodiments, the processor is configured to establish a protected predetermined service period based on a multi-AP operation for a first STA device by collaborating with a first AP device.

In a case where the computer device is an AP device, the processor is configured to perform all or part of processes applicable to the first AP device or the second AP device in the embodiments shown in FIG. 3 to FIG. 6 through the transceiver, which are not repeated herein.

In some embodiments, in a case where the computer device is an STA device, and the STA device is the first STA device in the method embodiments, the transceiver is configured to receive a first frame. The first frame indicates that a first AP device has established a protected predetermined service period based on a multi-AP operation for the first STA device.

In a case where the computer device is an STA device, the processor is configured to perform all or part of processes applicable to the first STA device or the second AP device in the embodiments shown in FIG. 4 or FIG. 6 through the transceiver, which are not repeated herein. the transmitter 2303 separately transmit signals/data, or the processor 2301 controls the transmitter 2303 to transmit signals/data, or the processor 2301 requests the transmitter 2303 to transmit signals/data, or the processor 2301 cooperates with the transmitter 2303 to transmit signals/data.

Some embodiments of the present disclosure further provide a computer program product. The computer program product includes one or more computer instructions stored in a computer-readable storage medium, and the one or more computer instructions, when read and executed by a processor of a computer device, cause the computer device to perform various processes applicable to the first STA device, the first AP device, or the second AP device in the methods shown in FIG. 3 to FIG. 6.

Some embodiments of the present disclosure further provide a chip. The chip includes a processor configured to call and run one or more computer programs to cause a computer device equipped with the chip to perform various processes applicable to the first STA device, the first AP device, or the second AP device in the methods shown in FIG. 3 to FIG. 6.

Some embodiments of the present disclosure further provide a computer program. The computer program, when loaded and run by a processor of a computer device, causes the computer device to perform various processes applicable to the first STA device, the first AP device, or the second AP device in the methods shown in FIG. 3 to FIG. 6.

## Claims

1. An operation method based on multiple access points (APs), applicable to a first AP device, the method comprising:
transmitting a first frame to establish a protected predetermined service period based on a multi-AP operation for a first station (STA) device, wherein the protected predetermined service period based on the multi-AP operation is a protected predetermined service period negotiated and established by the first AP device and at least one second AP device.

2. The method according to claim 1, further comprising:
performing a multi-AP coordination-based operation within the protected predetermined service period, wherein the multi-AP coordination-based operation comprises preferentially ensuring or only allowing the first AP device and the at least one second AP device to coordinate to perform frame exchange with member STAs, inclusive of the first STA device, within the protected predetermined service period using a specific coordinated transmission mode; or
performing a multi-AP cooperation-based operation within the protected predetermined service period, wherein the multi-AP cooperation-based operation comprises preferentially ensuring or only allowing the first AP device to perform frame exchange with member STAs, inclusive of the first STA device, within the protected predetermined service period, and managing or restricting, by the at least one second AP device, transmission of STAs in a basic service set (BSS) of the at least one second AP device to protect communications between the first AP device and the member STAs, inclusive of the first STA device, within the protected predetermined service period; or
in a case where a number of the at least one second AP device is n, performing a multi-AP coordination-based operation with a part of the n second AP devices and performing a multi-AP cooperation-based operation with another part of the n second AP devices within the protected predetermined service period, wherein n is greater than or equal to 2.

3. The method according to claim 2, wherein in performing the multi-AP coordination-based operation, a start time and an end time of a first service period in a BSS corresponding to the first AP device are same as a start time and an end time of a second service period within the protected predetermined service period, wherein the second service period is a service period in the BSS corresponding to the at least one second AP device that performs the multi-AP coordination-based operation with the first AP device within the protected predetermined service period.

4. The method according to claim 2 or 3, wherein the specific coordinated transmission mode comprises at least one of coordinated orthogonal frequency division multiple access (OFDMA), coordinated multi-user multiple-in multiple-out (MIMO), coordinated spatial reuse, joint transmission, or coordinated beamforming.

5. The method according to any one of claims 2 to 4, wherein performing the multi-AP coordination-based operation within the protected predetermined service period comprises:
transmitting a second frame to the at least one second AP device in a case of gaining a transmission opportunity, wherein the second frame is used to trigger the first AP device and the at least one second AP device to perform the multi-AP coordination-based operation within the protected predetermined service period.

6. The method according to any one of claims 2 to 4, wherein performing the multi-AP coordination-based operation within the protected predetermined service period comprises:
receiving a second frame from the at least one second AP device, wherein the second frame is used to trigger the first AP device and the at least one second AP device to perform the multi-AP coordination-based operation within the protected predetermined service period.

7. The method according to any one of claims 2 to 6, wherein in performing the multi-AP coordination-based operation, the method further comprises:
annunciating a quiet interval, wherein the quiet interval is used to shield a transmission operation of a second STA device that does not support the protected predetermined service period in a BSS corresponding to the first AP device within the protected predetermined service period.

8. The method according to claim 7, wherein the second STA device is an STA device that does not support the protected predetermined service period other than a specified type of STA device, wherein the specified type of STA device comprises at least one of an extremely high throughput (EHT) device or an ultra-high reliability (UHR) device.

9. The method according to claim 2, wherein in performing the multi-AP cooperation-based operation,
a duration of a first service period in a BSS corresponding to the first AP device is not overlapped with a duration of a third service period within the protected predetermined service period; or
a duration of a first service period in a BSS corresponding to the first AP device is partially overlapped with a duration of a third service period within the protected predetermined service period;
wherein the third service period is a predetermined service period in the BSS of the at least one second AP device that performs the multi-AP cooperation-based operation with the first AP device, and the BSS of the at least one second AP device is an overlapping basic service set (OBSS) of the BSS corresponding to the first AP device.

10. The method according to any one of claims 2 to 9, further comprising:
receiving a first request from the first STA device, wherein the first request is used to request to establish the protected predetermined service period.

11. The method according to claim 10, wherein the first request comprises first attribute information of the protected predetermined service period.

12. The method according to any one of claims 2 to 9, wherein transmitting the first frame comprises:
transmitting the first frame to the first STA device, wherein the first frame comprises first attribute information of the protected predetermined service period.

13. The method according to any one of claims 2 to 12, further comprising:
transmitting a second request to the at least one second AP device, wherein the second request is used to request the at least one second AP device and the first AP device to collaborate to establish the protected predetermined service period.

14. The method according to any one of claims 2 to 13, further comprising:
establishing a first service period in a BSS corresponding to the first AP device within the protected predetermined service period.

15. The method according to claim 14, wherein establishing the first service period in the BSS corresponding to the first device within the protected predetermined service period comprises:
transmitting a first broadcast message for establishing the first service period, wherein the first broadcast message comprises first attribute information of the protected predetermined service period.

16. The method according to claim 11, 12 or 15, wherein the first attribute information of the protected predetermined service period comprises at least one of a coordinated AP set that performs the multi-AP coordination-based operation, the specific coordinated transmission mode, a cooperated AP set performing a local multi-AP cooperation-based operation, or a cooperation mode corresponding to the multi-AP cooperation-based operation.

17. The method according to claim 16, wherein the protected predetermined service period is a restricted target wake time (R-TWT) period.

18. The method according to claim 17, wherein the first attribute information of the protected predetermined service period is in a Multi-AP Operation Information subfield in a Broadcast TWT Parameter Set field.

19. The method according to claim 18, wherein a Broadcast TWT Information subfield in the Broadcast TWT Parameter Set field comprises a Multi-AP Operation Information Present subfield, wherein a parameter value of the Multi-AP Operation Information Present subfield indicates whether the Broadcast TWT Parameter Set field comprises the Multi-AP Operation Information subfield, and the Broadcast TWT Parameter Set field comprises the Multi-AP Operation Information subfield in a case where the parameter value of the Multi-AP Operation Information Present subfield is a first specified value.

20. The method according to claim 18 or 19, wherein the Multi-AP Operation Information subfield comprises at least one of a Multi-AP Operation Control subfield, a Coordinated AP Set Information subfield, or a Cooperated AP Set Information subfield;
wherein the Multi-AP Operation Control subfield comprises at least one of a Multi-AP Operation Mode subfield, a Priority subfield, a Coordinated AP Set Information Present subfield, a Cooperated AP Set Information Present subfield, a Multi-AP Coordinated Transmission Mode subfield, a Multi-AP Cooperation Mode subfield, or a Reserved subfield; wherein
the Multi-AP Operation Mode subfield indicates a multi-AP operation mode, wherein the multi-AP operation mode comprises the multi-AP coordination-based operation and/or the multi-AP cooperation-based operation;
the Priority subfield indicates priority information of the first STA device;
the Coordinated AP Set Information Present subfield indicates whether the Coordinated AP Set Information subfield is present;
the Cooperated AP Set Information Present subfield indicates whether the Cooperated AP Set Information subfield is present;
the Multi-AP Coordinated Transmission Mode subfield indicates the specific coordinated transmission mode corresponding to the multi-AP coordination-based operation; and
the Multi-AP Cooperation Mode subfield indicates the cooperation mode corresponding to the multi-AP cooperation-based operation;
the Coordinated AP Set Information subfield indicates AP devices in the coordinated AP set; and
the Cooperated AP Set Information subfield indicates AP devices in the cooperated AP set.

21. The method according to claim 13, wherein transmitting the second request to the at least one second AP device comprises:
transmitting a first sub-request to the at least one second AP device in a case where the at least one second AP device is an AP device that performs the multi-AP coordination-based operation with the first AP device, wherein the first sub-request is used to request the at least one second AP device to establish a second service period in the BSS corresponding to the at least one second AP device within the protected predetermined service period.

22. The method according to claim 21, wherein the first sub-request comprises second attribute information of the protected predetermined service period, wherein the second attribute information of the protected predetermined service period comprises at least one of priority information of the first STA device, a coordinated AP set performing the multi-AP coordination-based operation, or the specific coordinated transmission mode corresponding to the multi-AP coordination-based operation.

23. The method according to claim 13, wherein transmitting the second request to the at least one second AP device comprises:
transmitting a second sub-request to the at least one second AP device in a case where the at least one second AP device is an AP device that performs the multi-AP cooperation-based operation with the first AP device, wherein the second sub-request comprises third attribute information of the protected predetermined service period, wherein the third attribute information of the protected predetermined service period comprises at least one of priority information of the first STA device or a cooperation mode corresponding to the multi-AP cooperation-based operation.

24. An operation method based on multiple access points (APs), applicable to a first station (STA) device, the method comprising:
receiving a first frame, wherein the first frame indicates that a first AP device has established a protected predetermined service period based on a multi-AP operation for the first STA device, wherein the protected predetermined service period based on the multi-AP operation is a protected predetermined service period negotiated and established by the first AP device and at least one second AP device.

25. The method according to claim 24, further comprising:
accepting a multi-AP coordination-based operation within the protected predetermined service period, wherein the multi-AP coordination-based operation comprises preferentially ensuring or only allowing the first AP device and the at least one second AP device to coordinate to perform frame exchange with member STAs, inclusive of the first STA device, within the protected predetermined service period using a specific coordinated transmission mode; or
accepting a multi-AP cooperation-based operation within the protected predetermined service period, wherein the multi-AP cooperation-based operation comprises preferentially ensuring or only allowing the first AP device to perform frame exchange with member STAs, inclusive of the first STA device, within the protected predetermined service period, and managing or restricting, by the at least one second AP device, transmission of STAs in a basic service set (BSS) of the at least one second AP device to protect communications between the first AP device and the member STAs, inclusive of the first STA device, within the protected predetermined service period; or
in a case where a number of the at least one second AP device is n, accepting a multi-AP coordination-based operation of the first AP device and a part of n second AP devices and accepting a multi-AP cooperation-based operation of the first AP device and another part of the n second AP devices within the protected predetermined service period, wherein n is greater than or equal to 2.

26. The method according to claim 25, wherein the specific coordinated transmission mode comprises at least one of coordinated orthogonal frequency division multiple access (OFDMA), coordinated multi-user multiple-in multiple-out (MIMO), coordinated spatial reuse, joint transmission, or coordinated beamforming.

27. The method according to claim 25 or 26, further comprising:
transmitting a first request to the first AP device, wherein the first request is used to request to establish the protected predetermined service period.

28. The method according to claim 27, wherein the first request comprises first attribute information of the protected predetermined service period.

29. The method according to any one of claims 25 to 28, wherein the first frame comprises first attribute information of the protected predetermined service period.

30. The method according to claim 28 or 29, wherein the first attribute information of the protected predetermined service period comprises at least one of a coordinated AP set that performs the multi-AP coordination-based operation, the specific coordinated transmission mode, a cooperated AP set performing a local multi-AP cooperation-based operation, or a cooperation mode corresponding to the multi-AP cooperation-based operation.

31. The method according to claim 30, wherein the protected predetermined service period is a restricted target wake time (R-TWT) period.

32. The method according to claim 31, wherein the first attribute information of the protected predetermined service period is in a Multi-AP Operation Information subfield in a Broadcast TWT Parameter Set field.

33. The method according to claim 32, wherein a Broadcast TWT Information subfield in the Broadcast TWT Parameter Set field comprises a Multi-AP Operation Information Present subfield, wherein a parameter value of the Multi-AP Operation Information Present subfield indicates whether the Broadcast TWT Parameter Set field comprises the Multi-AP Operation Information subfield, and the Broadcast TWT Parameter Set field comprises the Multi-AP Operation Information subfield in a case where the parameter value of the Multi-AP Operation Information Present subfield is a first specified value.

34. The method according to claim 32 or 33, wherein the Multi-AP Operation Information subfield comprises at least one of a Multi-AP Operation Control subfield, a Coordinated AP Set Information subfield, or a Cooperated AP Set Information subfield;
wherein the Multi-AP Operation Control subfield comprises at least one of a Multi-AP Operation Mode subfield, a Priority subfield, a Coordinated AP Set Information Present subfield, a Cooperated AP Set Information Present subfield, a Multi-AP Coordinated Transmission Mode subfield, a Multi-AP Cooperation Mode subfield, or a Reserved subfield; wherein
the Multi-AP Operation Mode subfield indicates a multi-AP operation mode, wherein the multi-AP operation mode comprises the multi-AP coordination-based operation and/or the multi-AP cooperation-based operation;
the Priority subfield indicates priority information of the first STA device;
the Coordinated AP Set Information Present subfield indicates whether the Coordinated AP Set Information subfield is present;
the Cooperated AP Set Information Present subfield indicates whether the Cooperated AP Set Information subfield is present;
the Multi-AP Coordinated Transmission Mode subfield indicates the specific coordinated transmission mode corresponding to the multi-AP coordination-based operation; and
the Multi-AP Cooperation Mode subfield indicates the cooperation mode corresponding to the multi-AP cooperation-based operation;
the Coordinated AP Set Information subfield indicates AP devices in the coordinated AP set; and
the Cooperated AP Set Information subfield indicates AP devices in the cooperated AP set.

35. An operation method based on multiple access points (APs), applicable to a second AP device, the method comprising:
establishing a protected predetermined service period based on a multi-AP operation for a first station (STA) device by collaborating with a first AP device, wherein the protected predetermined service period based on the multi-AP operation is a protected predetermined service period negotiated and established by the first AP device and at least one second AP device.

36. The method according to claim 35, wherein
performing a multi-AP coordination-based operation within the protected predetermined service period, wherein the multi-AP coordination-based operation comprises preferentially ensuring or only allowing the first AP device and the second AP device to coordinate to perform frame exchange with member STAs, inclusive of the first STA device, within the protected predetermined service period using a specific coordinated transmission mode; or
performing a multi-AP cooperation-based operation within the protected predetermined service period, wherein the multi-AP cooperation-based operation comprises preferentially ensuring or only allowing the first AP device to perform frame exchange with member STAs, inclusive of the first STA device, within the protected predetermined service period, and managing or restricting, by the second AP device, transmission of STAs in a basic service set (BSS) of the second AP device to protect communications between the first AP device and the member STAs, inclusive of the first STA device, within the protected predetermined service period.

37. The method according to claim 36, wherein in performing the multi-AP coordination-based operation, a start time and an end time of a first service period in a BSS corresponding to the first AP device are same as a start time and an end time of a second service period within the protected predetermined service period, wherein the second service period is a service period in the BSS corresponding to the second AP device within the protected predetermined service period.

38. The method according to claim 36 or 37, wherein the specific coordinated transmission mode comprises at least one of coordinated orthogonal frequency division multiple access (OFDMA), coordinated multi-user multiple-in multiple-out (MIMO), coordinated spatial reuse, joint transmission, or coordinated beamforming.

39. The method according to any one of claims 36 to 38, wherein performing the multi-AP coordination-based operation within the protected predetermined service period comprises:
transmitting a second frame to the first AP device in a case of gaining a transmission opportunity, wherein the second frame is used to trigger the first AP device and the second AP device to perform the multi-AP coordination-based operation within the protected predetermined service period.

40. The method according to any one of claims 36 to 38, wherein performing the multi-AP coordination-based operation within the protected predetermined service period comprises:
receiving a second frame from the second AP device, wherein the second frame is used to trigger the first AP device and the second AP device to perform the multi-AP coordination-based operation within the protected predetermined service period.

41. The method according to any one of claims 36 to 40, wherein in performing the multi-AP coordination-based operation, the method further comprises:
annunciating a quiet interval, wherein the quiet interval is used to shield a transmission operation of a second STA device that does not support the protected predetermined service period in the BSS corresponding to the second AP device within the protected predetermined service period.

42. The method according to claim 41, wherein the second STA device is an STA device that does not support the protected predetermined service period other than a specified type of STA device, wherein the specified type of STA device comprises at least one of an extremely high throughput (EHT) device or an ultra-high reliability (UHR) device.

43. The method according to claim 36, wherein in performing the multi-AP cooperation-based operation,
a duration of a first service period in a BSS corresponding to the first AP device is not overlapped with a duration of a third service period within the protected predetermined service period; or
a duration of a first service period in a BSS corresponding to the first AP device is partially overlapped with a duration of a third service period within the protected predetermined service period;
wherein the third service period is a predetermined service period in the BSS of the second AP device, and the BSS of the second AP device is an overlapping basic service set (OBSS) of the BSS corresponding to the first AP device.

44. The method according to any one of claims 36 to 40, wherein in performing the multi-AP coordination-based operation within the protected predetermined service period, collaborating with the first AP device to establish the protected predetermined service period based on the multi-AP operation for the first STA device comprises:
transmitting a second broadcast message for establishing a second service period, wherein the second service period is a service period in the BSS corresponding to the second AP device within the protected predetermined service period.

45. The method according to any one of claims 36 to 40, wherein in performing the multi-AP cooperation-based operation within the protected predetermined service period, the method further comprises:
transmitting a third broadcast message, wherein the third broadcast message is used to manage or restrict transmission of STAs in the BSS of the second AP device within the protected predetermined service period.

46. The method according to any one of claims 36 to 45, further comprising:
receiving a second request from the first AP device, wherein the second request is used to request to collaborate to establish the protected predetermined service period with the first AP device.

47. The method according to claim 46, wherein receiving the second request from the first AP device comprises:
receiving a first sub-request from the first AP device in a case where the second AP device is an AP device that performs the multi-AP coordination-based operation with the first AP device, wherein the first sub-request comprises second attribute information of the protected predetermined service period, wherein the second attribute information of the protected predetermined service period comprises at least one of priority information of the first STA device, a coordinated AP set performing the multi-AP coordination-based operation, or the specific coordinated transmission mode corresponding to the multi-AP coordination-based operation.

48. The method according to claim 46, wherein receiving the second request from the first AP device comprises:
receiving a second sub-request from the first AP device in a case where the second AP device is an AP device that performs the multi-AP coordination-based operation with the first AP device, wherein the second sub-request comprises third attribute information of the protected predetermined service period, wherein the third attribute information of the protected predetermined service period comprises at least one of priority information of the first STA device or a cooperation mode corresponding to the multi-AP coordination-based operation.

49. The method according to any one of claims 35 to 48, wherein the protected predetermined service period is a restricted target wake time (R-TWT) period.

50. An operation apparatus based on multiple access points (APs), comprising:
a transmitting module, configured to transmit a first frame to establish a protected predetermined service period based on a multi-AP operation for a first station (STA) device, wherein the protected predetermined service period based on the multi-AP operation is a protected predetermined service period negotiated and established by a first AP device and at least one second AP device.

51. An operation apparatus based on multiple access points (APs), comprising:
a receiving module, configured to receive a first frame, wherein the first frame indicates that a first AP device has established a protected predetermined service period based on a multi-AP operation for a first station (STA) device, wherein the protected predetermined service period based on the multi-AP operation is a protected predetermined service period negotiated and established by the first AP device and at least one second AP device.

52. An operation apparatus based on multiple access points (APs), comprising:
an establishing module, configured to establish a protected predetermined service period based on a multi-AP operation for a first station (STA) device by collaborating with a first AP device, wherein the protected predetermined service period based on the multi-AP operation is a protected predetermined service period negotiated and established by the first AP device and at least one second AP device.

53. An access point (AP) device, practiced as a first AP device, wherein the AP device comprises a processor, a memory, and a transceiver;
wherein the transceiver is configured to transmit a first frame to establish a protected predetermined service period based on a multi-AP operation for a first station (STA) device, wherein the protected predetermined service period based on the multi-AP operation is a protected predetermined service period negotiated and established by the first AP device and at least one second AP device.

54. A station (STA) device, practiced as a first STA device, wherein the STA device comprises a processor, a memory, and a transceiver,
wherein the transceiver is configured to receive a first frame, wherein the first frame indicates that a first access point (AP) device has established a protected predetermined service period based on a multi-AP operation for the first STA device, wherein the protected predetermined service period based on the multi-AP operation is a protected predetermined service period negotiated and established by the first AP device and at least one second AP device.

55. An access point (AP) device, practiced as a second AP device, wherein the AP device comprises a processor, a memory, and a transceiver;
wherein the transceiver is configured to establish a protected predetermined service period based on a multi-AP operation for a first station (STA) device by collaborating with a first AP device, wherein the protected predetermined service period based on the multi-AP operation is a protected predetermined service period negotiated and established by the first AP device and at least one second AP device.

56. A computer-readable storage medium, storing one or more computer programs, wherein the one or more computer programs, when loaded and run by a processor, cause a computer device to perform the method as defined in any one of claims 1 to 23, or the method as defined in any one of claims 24 to 34, or the method as defined in any one of claims 35 to 49.

57. A chip, comprising: a processor configured to call and run one or more computer programs to cause a computer device equipped with the chip to perform the method as defined in any one of claims 1 to 23, or the method as defined in any one of claims 24 to 34, or the method as defined in any one of claims 35 to 49.

58. A computer program product, comprising one or more computer instructions, wherein the one or more computer instructions are stored in a computer-readable storage medium, and when read and executed by a processor of a computer device, cause the computer device to perform the method as defined in any one of claims 1 to 23, or the method as defined in any one of claims 24 to 34, or the method as defined in any one of claims 35 to 49.

59. A computer program, wherein the computer program, when loaded and run by a processor of a computer device, causes the computer device to perform the method as defined in any one of claims 1 to 23, or the method as defined in any one of claims 24 to 34, or the method as defined in any one of claims 35 to 49.
